# FASCICULE DE BREVET EUROPEEN

(11) **EP 3 613 120 B1**
(45) Date de publication et mention de la délivrance du brevet: **14.07.2021**
(21) Numéro de dépôt: 18717077.4
(22) Date de dépôt: 18.04.2018
(51) Int. Cl.: H02J 5/00, H02J 3/36, H02M 7/00, H02M 7/483, H02M 7/217, H02M 7/25, H02M 1/36, H02J 13/00, H02J 9/06, H02J 1/14, H02J 7/34, H02J 7/00, H02J 1/08, H02J 3/00, H02J 3/28, H02J 3/46, H02J 4/00

(54) **DISPOSITIF DE CONTRÔLE D'UN TERMINAL POUR LE RÉTABLISSEMENT DE LA PUISSANCE DANS UNE INSTALLATION**
VORRICHTUNG ZUR STEUERUNG EINES TERMINALS ZUR LEISTUNGSERHEBUNG IN EINER ANLAGE
DEVICE FOR CONTROLLING A TERMINAL FOR POWER RECOVERY IN A FACILITY

(30) Priorité: 20.04.2017 FR 1753433
(43) Date de publication de la demande: 26.02.2020
(73) Titulaire: Supergrid Institute, 69100 Villeurbanne (FR)
(72) Inventeur: ZAMA, Ahmed, 69500 BRON (FR); ROMERO RODRIGUEZ, Miguel, 69007 Lyon (FR); BENCHAIB, Abdelkrim, 78180 Montigny le Bretonneux (FR); LUSCAN, Bruno, 69003 Lyon (FR)
(74) Mandataire: Cabinet Beau de Loménie
(86) Numéro de dépôt international: PCT/EP2018/059849
(87) Numéro de publication internationale: WO 2018/192947

(56) Documents cités:
- EP-A1- 0 550 348
- WO-A1-2011/150963
- WO-A1-2017/021642
- MARC PETIT ET AL: "Les réseaux HVDC multi-terminaux : des défis multiples en génie électrique", HAL, 18 septembre 2014 (2014-09-18), XP055403978,
- Hani Aziz Saad ET AL: "UNIVERSITÉ DE MONTRÉAL MODÉLISATION ET SIMULATION D'UNE LIAISON HVDC DE TYPE VSC-MMC", , 30 mars 2015 (2015-03-30), XP055404029, Extrait de l'Internet: URL:https://publications.polymtl.ca/1699/1 /2015_HaniAzizSaad.pdf [extrait le 2017-09-05]
- François Gruson ET AL: "Conception, réalisation et test d'une maquette de convertisseur Modulaire Multiniveaux", , 7 juin 2016 (2016-06-07), XP055404056, Extrait de l'Internet: URL:https://hal.archives-ouvertes.fr/hal-0 1361583/document [extrait le 2017-09-05]

## Description

### Arrière-plan de l'invention

La présente invention concerne le domaine technique des installations de transport de courant continu haute tension multi-terminaux (HVDC) et plus particulièrement un dispositif de contrôle d'un terminal pour le rétablissement de la puissance dans une telle installation.

De telles installations HVDC permettent le transport d'électricité sur de longues distances au moyen de lignes à courant continu de plusieurs centaines de kilomètres, formant une partie continue desdites installations. Ces installations permettent de transporter un courant continu, plutôt qu'un courant alternatif comme dans les installations traditionnelles. Elles sont particulièrement utilisées pour le transport électrique depuis ou jusqu'à des parcs éoliens offshore.

Les terminaux de ces installations comportent généralement un convertisseur permettant de convertir une tension alternative en une tension continue et inversement, le convertisseur étant connecté entre un réseau d'alimentation électrique alternatif et la partie continue de ladite installation. Ladite partie continue de l'installation peut notamment être placée dans un état haute tension et dans un état basse tension.

En pratique, par exemple pour des opérations de maintenance, il est souvent nécessaire de déconnecter la partie continue du reste de l'installation. Pour ce faire on isole la partie continue par rapport aux convertisseurs, de manière à placer la partie continue dans un état basse tension. Plus tard, par exemple lorsque les opérations de maintenance de la partie continue sont terminées, il convient de reconnecter la partie continue aux convertisseurs, Cela permet de rétablir la haute tension dans la partie continue, puis la puissance dans ladite installation, de manière à en rétablir le fonctionnement normal.

On connait des installations HVDC dans lesquelles il est proposé de rétablir la puissance à sa valeur nominale de fonctionnement en utilisant la puissance d'un réseau d'alimentation électrique alternatif. Plus particulièrement, le réseau d'alimentation électrique alternatif est dans ce cas utilisé comme source d'énergie pour rétablir la haute tension dans la partie continue de l'installation. Ceci a pour inconvénient de prélever une puissance importante directement sur ledit réseau d'alimentation électrique alternatif, ce qui le perturbe et nuit notamment à sa stabilité.

En outre, le rétablissement de la haute tension dans la partie continue de telles installations au moyen de la tension du réseau d'alimentation électrique alternatif n'est pas contrôlable. En conséquence, le temps de rétablissement de ladite haute tension n'est pas maîtrisé et peut s'avérer particulièrement important. De plus, il est complexe d'atteindre précisément la valeur de haute tension désirée.

Un autre exemple d'art antérieur est le document "Les réseaux HVDC multi-terminaux : des défis multiples en génie électrique" de Marc Petit; Bacha Seddik; Guillaud Xavier; Morel Hervé; Planson Dominique; Raison Bertrand ; Symposium de Génie Electrique SGE 14 -18 septembre 2014 (2014-09-18), XP055403978.

### Objet et résumé de l'invention

Un but de la présente invention est de proposer un dispositif de contrôle d'un terminal pour le rétablissement de la puissance dans une installation HVDC remédiant aux problèmes précités.

Pour ce faire, l'invention porte sur un dispositif de contrôle d'un terminal pour le rétablissement de la puissance dans une installation de transport de courant continu haute tension multi-terminaux HVDC selon la revendication 1, comportant le terminal, le terminal comprenant au moins un convertisseur permettant de convertir une tension alternative en une tension continue et inversement, ledit convertisseur comprenant un module de stockage d'énergie électrique et étant connecté entre un réseau d'alimentation électrique alternatif et une partie continue de ladite installation pouvant être placée dans un état haute tension et dans un état basse tension,
le dispositif comportant :
- un module d'isolation configuré pour commander l'isolation du convertisseur par rapport au réseau d'alimentation électrique alternatif, lorsque la partie continue de l'installation est dans l'état basse tension ;
- un module de transfert configuré pour commander le transfert de l'énergie stockée dans le module de stockage d'énergie électrique du convertisseur vers la partie continue de l'installation, afin de placer ladite partie continue dans l'état haute tension ;
- un module de connexion configuré pour commander la reconnexion du convertisseur au réseau d'alimentation électrique alternatif, lorsque la partie continue de l'installation est dans l'état haute tension ; et
- un module de rétablissement configuré pour commander le rétablissement de la puissance dans ladite installation.

L'installation peut comprendre de deux à plusieurs centaines de terminaux, dont le terminal contrôlé par le dispositif de contrôle selon l'invention. Ledit terminal constitue une interface entre la partie continue de l'installation et le réseau d'alimentation électrique alternatif.

La partie continue de l'installation permet le transport du courant continu entre les terminaux de ladite installation. Elle peut comprendre une ou plusieurs lignes de transport à courant continu reliant lesdits terminaux.

Par ailleurs, le réseau d'alimentation électrique alternatif peut comprendre une ou plusieurs lignes de transmission du courant alternatif. Ces lignes peuvent être reliées à une source de courant alternatif, par exemple d'un parc éolien.

Le module de stockage d'énergie électrique est apte à emmagasiner une énergie et à la restituer en temps voulu. De manière non limitative, le module de stockage d'énergie électrique peut comprendre un élément capacitif quelconque, tel un condensateur ou une pluralité de condensateurs.

Le convertisseur du terminal de la présente installation est de préférence, mais de manière non limitative, un convertisseur modulaire multi-niveaux (MMC). De tels convertisseurs sont particulièrement adaptés aux installations HVDC dans la mesure où ils permettent de minimiser les pertes de puissance. Les convertisseurs modulaire multi-niveaux (MMC) comportent une pluralité de sous-modules comprenant chacun un condensateur connectable en série. On comprend qu'en utilisant un tel convertisseur MMC dans la présente installation, l'ensemble desdits condensateurs du convertisseur joue de rôle de module de stockage d'énergie électrique. Sans sortir du cadre de l'invention, le convertisseur mis en œuvre peut être un convertisseur MMC en demi-pont, dit Half-Bridge (HB), un convertisseur en pont complet, dit Full-Bridge (FB) ou encore un convertisseur ayant une structure en Alternate Arm Converter (AAC). Ces structures sont bien connues de l'homme du métier.

La partie continue de l'installation est initialement dans son état basse tension, de sorte que la valeur de la tension de ladite partie continue est proche de 0 volt et de préférence de l'ordre de quelques Volts. En outre, la puissance dans l'installation et plus particulièrement dans la partie continue de l'installation est perturbée de sorte que sa valeur initiale diffère sensiblement de sa valeur nominale.

De manière non limitative, cette configuration initiale peut être le résultat une manœuvre de maintenance sur la partie continue de l'installation, impliquant par exemple une déconnexion de la partie continue de l'installation par rapport au convertisseur, ou encore une perturbation sur la partie continue de l'installation.

Le dispositif selon l'invention permet alors de rétablir la puissance dans l'installation, et plus particulièrement dans la partie continue de l'installation en faisant tendre ladite puissance vers sa valeur nominale. Ledit dispositif selon l'invention permet également de rétablir la puissance du réseau d'alimentation électrique alternatif à sa valeur nominale.

Grâce au module d'isolation, le réseau d'alimentation électrique alternatif est maintenu isolé du convertisseur et de la partie continue de l'installation, lors du rétablissement de la tension dans la partie continue. Aussi, contrairement à l'art antérieur, la partie continue de l'installation est placée dans l'état haute tension sans utiliser l'énergie du réseau d'alimentation électrique alternatif. Par conséquent, ledit réseau d'alimentation électrique alternatif n'est pas impacté et sa stabilité n'est pas perturbée.

En outre, grâce au module de transfert, l'énergie stockée dans le module de stockage d'énergie électrique du convertisseur est utilisée pour rétablir la haute tension dans la partie continue de l'installation. En conséquence, le convertisseur reste contrôlable contrairement aux installations de l'art antérieur dans lesquelles les convertisseurs se comportent généralement en pont de diodes et ne sont pas contrôlables.

Le dispositif selon l'invention permet donc de s'affranchir de la perte de contrôle du convertisseur de sorte qu'il permet de maîtriser plus efficacement la mise à l'état haute tension de la partie continue de l'installation. Les temps de rétablissement de la haute tension sont en conséquence maîtrisés et peuvent être réduits. De plus, le dispositif selon l'invention permet d'atteindre la valeur de haute tension désirée, de préférence la valeur nominale de haute tension, avec une meilleure précision. Par ailleurs, l'utilisation d'un convertisseur de type modulaire multi-niveaux améliore encore la maîtrise de la mise à l'état haute tension de la partie continue de l'installation.

De préférence, le terminal comprend des premiers moyens d'isolation commandables disposés entre le convertisseur et le réseau d'alimentation électrique alternatif, le module de connexion et le module d'isolation étant configurés pour commander lesdits premiers moyens d'isolation pour permettre respectivement la connexion et l'isolation dudit convertisseur par rapport au réseau d'alimentation électrique alternatif.

Les premiers moyens d'isolation sont des coupe-circuits et préférentiellement des disjoncteurs à courant alternatif ou « Alternative Current Circuit Breaker (ACCB) » en langue anglaise. Ces premiers moyens d'isolation présentent un état ouvert, dans lequel ils assurent l'isolation entre le convertisseur et le réseau d'alimentation électrique alternatif, et un état fermé dans lequel ils assurent la connexion du convertisseur audit réseau. Ces premiers moyens d'isolation sont choisis de manière à présenter des temps de commutation les plus faibles possibles.

Avantageusement, le convertisseur peut être placé dans un état commandable ou dans un état bloqué, et le dispositif comprend :
- un module de réception d'un signal de déclenchement ;
- un module de blocage configuré pour commander la mise en état bloqué du convertisseur, en réponse au signal de déclenchement,
   le module d'isolation étant en outre configuré pour commander l'isolation de la partie continue de l'installation par rapport au convertisseur, avant l'isolation du convertisseur par rapport au réseau d'alimentation électrique alternatif.

Dans l'état commandable, le convertisseur est apte à restituer l'énergie stockée dans son module de stockage d'énergie électrique et peut donc contribuer au contrôle de la tension de la partie continue de l'installation. Dans l'état bloqué, le convertisseur ne restitue sensiblement pas d'énergie et ne permet donc pas de rétablir la tension de la partie continue de l'installation. En particulier, un convertisseur modulaire multiniveaux à l'état bloqué se comporte comme un pont de diodes de sorte que ses sous-modules ne sont pas commandés, et la tension aux bornes des condensateurs des sous-modules reste inchangée.

De préférence, mais de manière non limitative, le signal de déclenchement est émis en réponse à la détection d'une anomalie sur la partie continue de l'installation, encore de préférence en réponse à la détection d'une augmentation du courant au sein des bras du convertisseur au-delà d'un seuil prédéterminé. De telles augmentations du courant peuvent être causées par des fuites de courant sur la partie continue de l'installation HVDC, pouvant causer de lourds dégâts sur l'installation.

Grâce à l'invention, lorsqu'un signal de déclenchement est reçu, le convertisseur est immédiatement placé dans l'état bloqué. Dans l'étape suivante, le convertisseur est isolé de la partie continue de l'installation grâce au module d'isolation, ce qui assure la protection dudit convertisseur et du reste de l'installation.

Par ailleurs, l'isolation de la partie continue de l'installation par rapport au convertisseur devient généralement effective plus rapidement que l'isolation du convertisseur par rapport au réseau d'alimentation électrique alternatif, à compter de la commande d'isolation. Aussi, sans sortir du cadre de l'invention, l'isolation de la partie continue de l'installation par rapport au convertisseur et l'isolation du convertisseur par rapport au réseau d'alimentation électrique alternatif pourraient être commandées simultanément avec l'isolation de la partie continue intervenant avant l'isolation du convertisseur par rapport au réseau d'alimentation électrique alternatif.

Préférentiellement :
- le module d'isolation est en outre configuré pour commander le maintien de l'isolation de la partie continue de l'installation par rapport au convertisseur pendant une durée choisie;
- le module de connexion est en outre configuré pour commander la reconnexion de la partie continue de l'installation au convertisseur; et
- le module de blocage est en outre configuré pour commander la mise en état commandable du convertisseur.

Un intérêt de ce mode de réalisation est de permettre une intervention sur la partie continue de l'installation durant le maintien de l'isolation, de manière à réaliser des réparations ou des opérations de maintenance sur ladite partie continue.

La durée de maintien de l'isolation peut être une durée prédéterminée. Dans ce cas, le module d'isolation peut être muni d'un minuteur programmable. De manière alternative, la reconnexion de la partie continue au convertisseur peut être réalisée en réponse à une action d'un opérateur, par exemple sur un interrupteur lorsque les opérations de maintenance sur la partie continue sont terminées.

Par ailleurs, dans les installations HVDC traditionnelles, le rétablissement de la tension de la partie continue est réalisé à l'aide de la tension du réseau d'alimentation électrique alternatif, de manière non contrôlée. Aussi, il est nécessaire d'utiliser des résistances de pré-insertion (PIR) pour s'affranchir des courants d'enclenchement, également appelés surintensités transitoires, lors de la reconnexion de la partie continue de l'installation au convertisseur. Grâce au dispositif selon l'invention, le rétablissement de la tension dans la partie continue de l'installation est contrôlé et maitrisé. Les risques d'apparition de courants d'enclenchements sont fortement réduits de sorte qu'il n'est pas nécessaire d'utiliser de telles résistances de pré-insertion.

Lorsque le convertisseur est de nouveau placé dans l'état commandable, il permet de rétablir la tension de la partie continue de l'installation et notamment de faire passer ladite partie continue de l'état basse tension à l'état haute tension.

De manière avantageuse, le terminal comprend en outre des seconds moyens d'isolation commandables disposés entre le convertisseur et la partie continue de l'installation, le module de connexion et le module d'isolation étant configurés pour commander lesdits seconds moyens d'isolation pour permettre respectivement la connexion et l'isolation de la partie continue de l'installation par rapport au convertisseur.

Les seconds moyens d'isolation sont des coupe-circuits et préférentiellement des disjoncteurs à courant continu ou « Direct Current Circuit Breaker (DCCB) » en langue anglaise. Ces seconds moyens d'isolation présentent un état ouvert, dans lequel ils assurent l'isolation entre le convertisseur et la partie continue de l'installation, et un état fermé dans lequel il assure la connexion du convertisseur à ladite partie continue. Ces seconds moyens d'isolation sont choisis de manière à présenter des temps de commutation les plus faibles possibles.

L'invention porte également sur une installation de transport de courant continu haute tension multi-terminaux HVDC selon la revendication 6, comprenant une pluralité de terminaux, au moins un des terminaux comprenant un dispositif de contrôle tel que décrit précédemment et un convertisseur contrôlé par un tel dispositif et permettant de convertir une tension alternative en une tension continue et inversement, le convertisseur comprenant un module de stockage d'énergie électrique et étant connecté à un réseau d'alimentation électrique alternatif qui lui est propre, lesdits terminaux étant reliés entre eux par l'intermédiaire d'une pluralité de lignes à courant continu formant la partie continue de l'installation.

On comprend qu'au moins un des convertisseurs est apte à participer au rétablissement de la haute tension dans la partie continue de l'installation.

De préférence, l'installation comporte une pluralité de terminaux comprenant un convertisseur contrôlé par un tel dispositif de contrôle, de sorte que les convertisseurs de ces terminaux sont aptes à contribuer au rétablissement de la haute tension dans la partie continue. Les dispositifs de contrôle de l'installation commandent alors préférentiellement ces terminaux de manière synchronisée et, encore de préférence, de manière identique.

Dans cette configuration, chacun des terminaux comprenant un convertisseur contrôlé par un dispositif de contrôle selon l'invention peut fournir une énergie électrique à la partie continue de l'installation, de sorte que ces terminaux peuvent contribuer communément au rétablissement de la tension dans la partie continue de l'installation et au rétablissement de la puissance dans l'installation, ce qui réduit considérablement les temps de rétablissement desdites tension et puissance.

Selon une variante, tous les convertisseurs de l'installation ne fournissent pas simultanément une énergie à la partie continue de l'installation. Aussi, tous les terminaux comprenant un convertisseur contrôlé par un dispositif de contrôle ne participent pas, à chaque instant, au rétablissement de la tension dans la partie continue de l'installation.

Par exemple, chacun de ces convertisseurs peut disposer d'une énergie initiale disponible dans son module de stockage d'énergie et peut procéder au rétablissement de la tension de la partie continue avec un courant adapté. Toutefois, lorsque l'énergie stockée dans le module de stockage de l'un de ces convertisseurs devient inférieure à un seuil bas, ledit convertisseur cesse de participer au rétablissement de la tension, tandis que les autres convertisseurs continuent de fournir une énergie. Lorsque la tension de la partie continue de l'installation atteint une valeur correspondant à l'état haute tension, tous les convertisseurs cessent de fournir de l'énergie à la partie continue de l'installation.

De manière avantageuse, l'installation comprend un organe de contrôle de l'installation comprenant un module de localisation configuré pour localiser au moins une ligne à courant continu défaillante pendant le maintien de l'isolation de la partie continue de l'installation par rapport au convertisseur, et un module d'isolation de ligne configuré pour commander l'isolation de ladite ligne à courant continu défaillante par rapport à la partie continue de l'installation. Un intérêt de ce mode de réalisation est de pouvoir procéder à des réparations sur la ligne défaillante sans impacter les autres lignes de la partie continue de l'installation. Il est en outre possible de procéder au rétablissement de la tension dans la partie continue tout en maintenant la ligne défaillante isolée, afin de la réparer ultérieurement.

Avantageusement, les lignes à courant continu sont munies de premiers moyens d'isolation de ligne disposés en une première extrémité desdites lignes et de seconds moyens d'isolation de ligne disposés en une seconde extrémité desdites lignes, le module d'isolation de ligne étant configuré pour commander lesdits premiers et seconds moyens d'isolation de ligne de la ligne défaillante pour permettre l'isolation de ladite ligne par rapport à la partie continue de l'installation. Là-encore, les premiers et seconds moyens d'isolation de ligne sont de préférence des disjoncteurs à courant continu présentant un état ouvert et un état fermé.

Selon un aspect particulièrement avantageux de l'invention, l'installation comprend au moins un terminal supplémentaire comportant un dispositif de contrôle supplémentaire et un convertisseur supplémentaire contrôlé par ledit dispositif supplémentaire, le convertisseur supplémentaire comprenant un module de stockage d'énergie électrique et étant connecté entre un réseau d'alimentation électrique alternatif supplémentaire qui lui est propre et la partie continue de l'installation, ledit convertisseur supplémentaire pouvant être placé dans un état de compensation dans lequel il est apte à fournir une tension alternative de compensation dans ledit réseau alternatif supplémentaire, et en ce que ledit dispositif de contrôle supplémentaire comprend :
- un module de réception supplémentaire du signal de déclenchement ;
- un module de blocage supplémentaire configuré pour commander la mise en état bloqué du convertisseur supplémentaire dudit terminal supplémentaire, en réponse au signal de déclenchement ;
- un module d'isolation supplémentaire configuré pour commander l'isolation de la partie continue de l'installation par rapport audit convertisseur supplémentaire ;
- un module de compensation configuré pour commander la mise en état de compensation dudit convertisseur supplémentaire, de manière à fournir une tension alternative de compensation au réseau d'alimentation électrique alternatif supplémentaire; et
- un module de connexion supplémentaire configuré pour commander la reconnexion dudit convertisseur supplémentaire à la partie continue de l'installation après la reconnexion des convertisseurs des autres terminaux de l'installation aux réseaux d'alimentation électrique alternatifs qui leur sont propres.

De manière générale, de tels terminaux supplémentaires sont reliés à un réseau d'alimentation électrique alternatif dit « faible », c'est-à-dire un réseau sensible à la perturbation, ayant une puissance de court-circuit faible. Un intérêt est d'améliorer la stabilité dudit réseau alternatif faible en lui fournissant une tension alternative de compensation.

Les terminaux de l'installation et ledit au moins un terminal supplémentaire sont de préférence synchronisés. Aussi, pendant que les terminaux de l'installation contribuent notamment au rétablissement de la tension dans la partie continue de l'installation, ledit au moins un terminal supplémentaire contribue à la stabilité du réseau d'alimentation électrique alternatif supplémentaire faible auquel il est relié.

L'invention porte également sur un procédé de contrôle d'un terminal pour le rétablissement de la puissance dans une installation de transport de courant continu haute tension multi-terminaux selon la revendication 10, comportant le terminal, ledit terminal comprenant au moins un convertisseur permettant de convertir une tension alternative en une tension continue et inversement, ledit convertisseur comprenant un module de stockage d'énergie électrique et étant connecté entre un réseau d'alimentation électrique alternatif et une partie continue de l'installation pouvant être placée dans un état basse tension et dans un état haute tension,
le procédé comprenant les étapes de :
- isolation du convertisseur par rapport au réseau d'alimentation électrique alternatif, lorsque la partie continue de l'installation est dans l'état basse tension ;
- transfert de l'énergie stockée dans le module de stockage d'énergie électrique du convertisseur vers la partie continue de l'installation, afin de placer ladite partie continue de l'installation dans l'état haute tension ;
- reconnexion du convertisseur au réseau d'alimentation électrique alternatif ; et
- rétablissement de la puissance dans l'installation.

Dans cette variante du procédé selon l'invention, la partie continue de l'installation est initialement à l'état basse tension, de sorte qu'il est nécessaire d'y rétablir la tension. En outre, la puissance dans l'installation n'est pas à sa valeur nominale, notamment dans la partie continue. Grâce au procédé selon l'invention, le réseau d'alimentation électrique alternatif est maintenu isolé du convertisseur et de la partie continue de l'installation lors du transfert de l'énergie vers la partie continue. Aussi, contrairement à l'art antérieur, la partie continue de l'installation est placée dans l'état haute tension sans utiliser l'énergie du réseau d'alimentation électrique alternatif. Par conséquent, ledit réseau d'alimentation électrique alternatif n'est pas impacté et sa stabilité n'est pas perturbée.

En outre, le convertisseur reste contrôlable, de sorte qu'il permet de maîtriser efficacement la mise à l'état haute tension de la partie continue de l'installation.

En variante, le convertisseur peut être placé dans un état commandable ou dans un état bloqué, et la partie continue de l'installation est placée dans l'état basse tension grâce aux étapes antérieures de :
- réception d'un signal de déclenchement ;
- mise en état bloqué du convertisseur, en réponse au signal de déclenchement ; puis
- isolation de la partie continue de l'installation par rapport au convertisseur.

De manière non limitative, ce signal de déclenchement peut être émis par pression d'un opérateur sur un interrupteur, de type bouton d'arrêt d'urgence. Les étapes préliminaires de cette variante, permettent d'isoler la partie continue, par exemple pour réaliser des réparations, avant de procéder au rétablissement de la haute tension dans ladite partie continue de l'installation puis de la puissance dans l'installation, une fois les réparations réalisées. On améliore ainsi la sécurité de l'installation.

De manière avantageuse, après l'étape d'isolation du convertisseur par rapport au réseau d'alimentation électrique alternatif et avant l'étape de transfert de l'énergie stockée dans le module de stockage d'énergie électrique du convertisseur vers la partie continue de l'installation, le procédé comprend les étapes intermédiaires de :
- maintien de l'isolation de la partie continue de l'installation par rapport au convertisseur pendant une durée choisie ;
- reconnexion de la partie continue de l'installation au convertisseur ; et
- mise en état commandable du convertisseur.

Lorsqu'il est placé dans l'état commandable, le convertisseur est de nouveau apte à fournir une énergie pour placer la partie continue de l'installation dans l'état haute tension.

De préférence, le signal de déclenchement est émis en réponse à la détection d'une anomalie sur la partie continue de l'installation et le procédé comprend une étape de correction de l'anomalie simultanée à l'étape de maintien de l'isolation de la partie continue de l'installation par rapport au convertisseur.

Encore de préférence, l'émission du signal de déclenchement est réalisée en réponse à la détection d'une augmentation du courant de la partie continue de l'installation au-delà d'un seuil prédéterminé. Une telle augmentation du courant peut être causée par une fuite de courant sur la partie continue. Le procédé selon l'invention permet donc de protéger l'installation et notamment les terminaux d'une telle anomalie.

Avantageusement, l'installation comprend une pluralité de terminaux, chacun des terminaux comprenant un convertisseur permettant de convertir une tension alternative en une tension continue et inversement, chacun des convertisseurs comprenant un module de stockage d'énergie électrique et étant connecté à un réseau d'alimentation électrique alternatif qui lui est propre, lesdits convertisseurs étant reliés entre eux par l'intermédiaire d'une pluralité de lignes à courant continu formant la partie continue de l'installation, chacun desdits terminaux étant contrôlés de manière synchronisée.

De préférence, le procédé comprend, pendant l'étape de maintien de l'isolation de la partie continue de l'installation par rapport aux convertisseurs :
- une étape de localisation d'une ligne à courant continu défaillante ; et
- une étape d'isolation de ladite ligne à courant continu défaillante par rapport à la partie continue de l'installation.

Préférentiellement, l'installation comprend au moins un terminal supplémentaire comportant un convertisseur supplémentaire comprenant un module de stockage d'énergie électrique et étant connecté entre un réseau d'alimentation électrique alternatif supplémentaire qui lui est propre et la partie continue de l'installation, ledit convertisseur supplémentaire pouvant être placé dans un état de compensation dans lequel il est apte à fournir une tension alternative de compensation dans ledit réseau alternatif supplémentaire, ledit procédé comprenant les étapes de :
- mise en état bloquée du convertisseur supplémentaire dudit terminal supplémentaire, en réponse au signal de déclenchement ;
- isolation de la partie continue de l'installation par rapport audit convertisseur supplémentaire ;
- mise en état de compensation dudit convertisseur supplémentaire, de manière à fournir une tension alternative de compensation au réseau d'alimentation électrique alternatif supplémentaire propre audit convertisseur supplémentaire ; et
- reconnexion dudit convertisseur supplémentaire à la partie continue de l'installation après l'étape de reconnexion des convertisseurs des autres terminaux de l'installation aux réseaux d'alimentation électrique alternatifs qui leur sont propres.

### Brève description des dessins

L'invention sera mieux comprise à la lecture de la description qui suit de modes de réalisation de l'invention donnés à titre d'exemples non limitatifs, en référence aux dessins annexés, sur lesquels :
- la figure **1** illustre un terminal comprenant un premier mode de réalisation d'un dispositif de contrôle selon l'invention ;
- la figure **2** illustre le convertisseur MMC du terminal de la figure **1** ;
- la figure **3** illustre un sous-module du convertisseur de la figure **2** ;
- la figure **4** illustre un terminal comprenant un second mode de réalisation d'un dispositif de contrôle selon l'invention ;
- la figure **5** illustre une installation HVDC comprenant une pluralité de terminaux selon la figure **4****,** dans un premier état ;
- la figure **6** illustre l'installation de la figure **5****,** dans un deuxième état ;
- la figure **7** illustre l'installation de la figure **5****,** dans un troisième état ;
- la figure **8** illustre l'installation de la figure **5****,** dans un quatrième état ;
- la figure **9** illustre l'installation de la figure **5****,** dans un cinquième état ;
- la figure **10** illustre l'installation de la figure **5****,** dans un sixième état ;
- la figure **11** est un chronogramme qui illustre un premier exemple de mise en œuvre du procédé selon l'invention ; et
- la figure **12** est un chronogramme qui illustre un second exemple de mise en œuvre du procédé selon l'invention.

### Description détaillée de l'invention

L'invention porte sur un dispositif **10** de contrôle d'un terminal **12** pour le rétablissement de la puissance dans une installation **14** de transport de courant continu haute tension multi-terminaux HVDC.

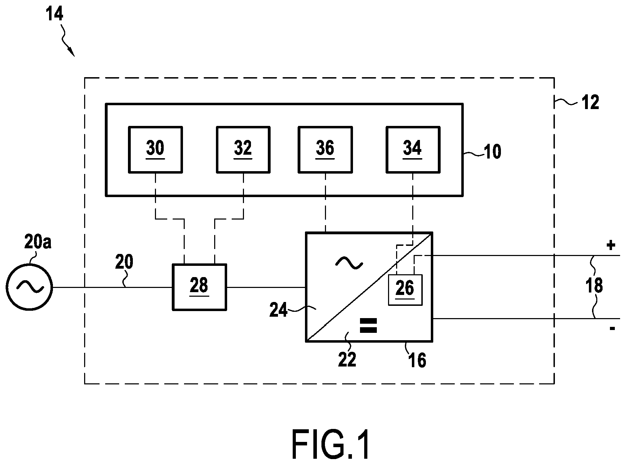

La figure **1** illustre un terminal **12** d'une installation HVDC **14,** le terminal **12** comprenant un premier mode de réalisation d'un dispositif de contrôle **10** selon l'invention. Le terminal **12** de l'installation **14** comprend un convertisseur **16** de tension, configuré pour convertir une tension alternative en une tension continue et inversement. Le convertisseur **16** est connecté d'une part à une partie continue **18** de l'installation **14** et d'autre part à un réseau d'alimentation électrique alternatif **20.**

La partie continue **18** de l'installation **14** comporte une borne positive et une borne négative et est configurée pour relier plusieurs terminaux, par exemple au moyen de lignes à courant continu. Ladite partie continue **18** de l'installation **14** peut prendre un état haute tension dans lequel la tension de la partie continue **18** est de l'ordre de quelques centaines de kilo-volts et un état basse tension, dans lequel la tension de la partie continue est inférieure au kilo-volts, de préférence sensiblement nulle.

Le réseau d'alimentation électrique alternatif **20** est de préférence un réseau triphasé, composé de trois lignes de transmission du courant alternatif, reliées à une source de courant alternatif **20a,** par exemple un parc éolien.

Le convertisseur **16** comprend une sortie continue **22** reliée à la partie continue **18** de l'installation, et une sortie alternative **24,** reliée au réseau d'alimentation électrique alternatif **20.** Le convertisseur **16** comprend en outre un module de stockage d'énergie électrique **26** apte à emmagasiner une énergie et à la restituer en temps voulu. Le convertisseur **16** peut en outre être placé dans un état commandable et dans un état bloqué.

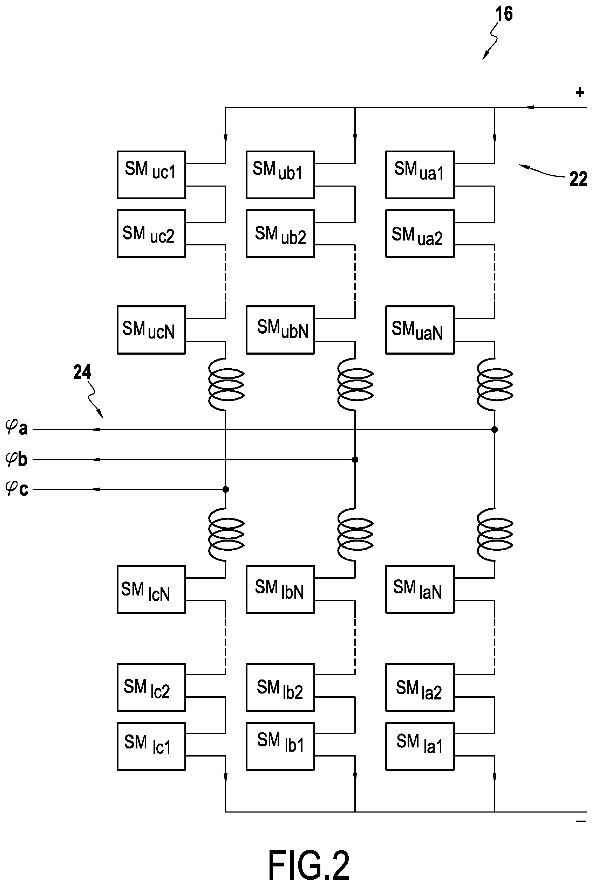

Dans cet exemple non-limitatif, le convertisseur est de type modulaire multi-niveaux. Un tel convertisseur, représenté en figure **2** comporte, pour un courant triphasé d'entrée/sortie (comportant trois phases *ϕₐ, ϕ_{b}* et *ϕ_{c}*), trois bras de conversion, chaque bras comprend une pluralité de sous-modules ***SMₓᵢⱼ*** qui peuvent être commandés suivant une séquence souhaitée.

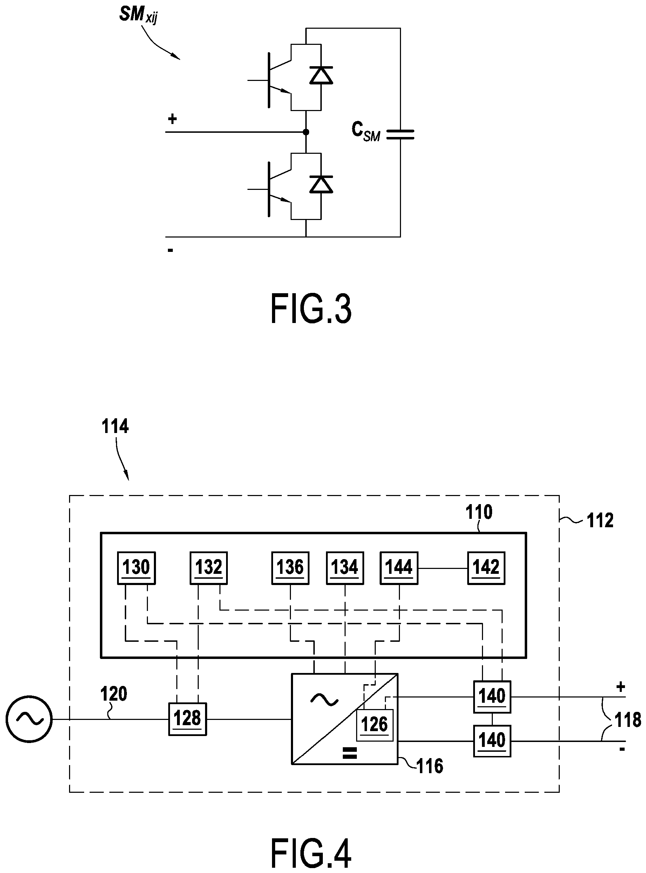

La figure **3** représente un sous-module du convertisseur de la figure **2****.** Ce sous-module ***SMₓᵢⱼ*** comporte un condensateur ***C_{SM}*** et des organes de commande pour connecter sélectivement ce condensateur en série entre les bornes du sous-module ***SMₓᵢⱼ*** ou pour le contourner. Les sous-modules sont commandés selon une séquence choisie pour faire varier progressivement le nombre d'éléments de stockage d'énergie qui sont connectés en série dans les bras du convertisseur **16** de façon à fournir plusieurs niveaux de tension. L'ensemble des condensateurs *C_{SM}* des sous-modules du convertisseur forme le module de stockage d'énergie électrique **26** du convertisseur **16.**

En se référant de nouveau à la figure **1****,** le terminal **12** comporte en outre des premiers moyens d'isolation **28** commandables disposés entre le convertisseur **16** et le réseau d'alimentation électrique alternatif **20.** Ces premiers moyens d'isolation **28** sont des disjoncteurs à courant alternatif ou Alternative Current Circuit Breaker (ACCB) en langue anglaise. Ils présentent un état ouvert, dans lequel ils assurent l'isolation entre le convertisseur **16** et le réseau d'alimentation électrique alternatif **20,** et un état fermé dans lequel ils assurent la connexion du convertisseur **16** audit réseau **20.**

Par ailleurs, dans ce premier mode de réalisation, le dispositif de contrôle **10** selon l'invention comprend un module d'isolation **30** relié aux premiers moyens d'isolation **28** et configuré pour commander la mise dans l'état ouvert desdits premiers moyens d'isolation **28.** Le module d'isolation **30** est donc configuré pour commander l'isolation du convertisseur **16** par rapport au réseau d'alimentation électrique alternatif **20.**

Le dispositif de contrôle **10** comprend en outre un module de connexion **32** également relié aux premiers moyens d'isolation **28** et configuré pour commander la mise dans l'état fermé desdits premiers moyens d'isolation **28.** Le module de connexion **32** est donc configuré pour commander la reconnexion du convertisseur **16** au réseau d'alimentation électrique alternatif **20.**

De plus, le dispositif de contrôle **10** comprend un module de transfert **34** relié au convertisseur **16** et configuré pour transmettre audit convertisseur un signal de transfert, afin de commander le transfert de l'énergie stockée dans le module de stockage d'énergie électrique **26** du convertisseur **16** vers la partie continue **18** de l'installation **14.** Grâce au module de transfert **34,** le dispositif de contrôle **10** permet donc de commander l'injection d'une tension dans la partie continue **18** de l'installation de manière maîtrisée et contrôlée.

Enfin, le dispositif de contrôle comprend un module de rétablissement **36,** relié au convertisseur **16** et configuré pour commander le rétablissement de la puissance dans ladite installation.

En pratique, dans ce premier mode de réalisation du dispositif de contrôle **10** selon l'invention, le convertisseur **16** est initialement dans l'état commandable. Par ailleurs, la partie continue **18** de l'installation **14** est initialement dans l'état basse tension. Cet état peut être causé par une intervention volontaire d'un opérateur, par exemple pour procéder à des réparations sur ladite partie continue. Cet état peut également être le résultat de perturbations sur l'installation **14** causant une chute de la tension de la partie continue **18.**

En conséquence, la puissance dans l'installation **14,** et plus particulièrement dans la partie continue **18** de l'installation est perturbée de sorte que sa valeur initiale diffère sensiblement de sa valeur nominale de fonctionnement. De manière non limitative, la puissance dans l'installation peut être initialement nulle.

On comprend qu'il est alors nécessaire de rétablir la tension dans la partie continue **18** de l'installation **14,** et donc de placer la partie continue dans son état haute tension, afin de pouvoir ensuite rétablir la puissance dans l'installation **14.**

Pour ce faire, le module d'isolation **30** commande dans un premier temps l'ouverture des premiers moyens d'isolation **28,** afin d'isoler le convertisseur **16** par rapport au réseau d'alimentation électrique alternatif **20.** Le module de transfert **34** envoie ensuite un signal de transfert au convertisseur afin de commander le transfert de l'énergie stockée dans le module de stockage d'énergie électrique **26** du convertisseur **16** vers la partie continue **18** de l'installation **14.** Ceci a pour conséquence de rétablir la tension, et donc de placer la partie continue **18** de l'installation dans l'état haute tension.

L'isolation entre le convertisseur **16** et le réseau d'alimentation électrique alternatif **20** est maintenue durant le transfert d'énergie. Aussi, la partie continue **18** de l'installation est placée dans l'état haute tension sans utiliser l'énergie du réseau d'alimentation électrique alternatif **20,** qui n'est donc pas impacté et dont la stabilité n'est pas perturbée.

En outre, le convertisseur **16** reste contrôlable durant le transfert d'énergie, de sorte que la mise à l'état haute tension est maîtrisée et précise.

Lorsque le transfert de l'énergie est terminé et que la partie continue **18** de l'installation **14** est placée dans l'état haute tension, le module de connexion **32** commande la fermeture des premiers moyens d'isolation **28,** de manière à reconnecter le convertisseur **16** et le réseau d'alimentation électrique alternatif **20.**

Le module de rétablissement **36** procède alors au rétablissement de la puissance à sa valeur nominale dans l'installation. De manière non limitative, le module de rétablissement peut commander le convertisseur **16,** de sorte que ledit convertisseur réalise le rétablissement de la puissance dans l'installation, qui passe par exemple d'une valeur nulle à sa valeur nominale.

Lorsque la puissance de l'installation est rétablie, l'installation peut reprendre un fonctionnement normal.

La figure **4** illustre une variante de l'installation **14** de la figure **1****.** Dans cette variante, l'installation HVDC **114** comprend un terminal **112** comprenant un second mode de réalisation du dispositif de contrôle **110** selon l'invention.

De manière similaire à l'exemple de la figure **1****,** le terminal **114** de la figure **4** comprend en outre un convertisseur **116,** muni d'un module de stockage d'énergie électrique **126** et connecté entre une partie continue **118** de l'installation **114** et un réseau d'alimentation électrique alternatif **120.** Le terminal **112** comprend également des premiers moyens d'isolation **128** disposés entre le convertisseur **116** et le réseau d'alimentation électrique alternatif **120.**

Le terminal **114** comprend de plus, par rapport au terminal de la figure **1****,** des seconds moyens d'isolation **140** commandables disposés entre le convertisseur **116** et la partie continue de l'installation **118.** Ces seconds moyens d'isolation **140** sont des disjoncteurs à courant continu ou Direct Current Circuit Breaker (DCCB) en langue anglaise. Ils présentent un état ouvert, dans lequel ils assurent l'isolation entre le convertisseur **116** et la partie continue **118** de l'installation **114,** et un état fermé dans lequel ils assurent la connexion du convertisseur **116** à ladite partie continue **118.**

Par ailleurs, dans ce second mode de réalisation, le dispositif de contrôle **110** selon l'invention comprend, comme dans le mode de réalisation de la figure **1****,** un module d'isolation **130** relié aux premiers moyens d'isolation **128.** Dans le présent exemple, ce module d'isolation **130** est, de plus, relié aux seconds moyens d'isolation **140.** Il est configuré pour commander la mise dans l'état ouvert desdits premiers et seconds moyens d'isolation **128,140.** Le module d'isolation **130** est donc configuré pour commander indépendamment l'isolation du convertisseur **116** par rapport au réseau d'alimentation électrique alternatif **120** et l'isolation du convertisseur **116** par rapport à la partie continue **118** de l'installation.

De manière similaire au dispositif de contrôle de la figure **1****,** le dispositif de contrôle **110** de ce second mode de réalisation comprend un module de connexion **132** relié aux premiers moyens d'isolation **128.** Dans le présent exemple, le module de connexion **132** est, de plus, relié aux seconds moyens d'isolation **140.** Il est donc configuré pour commander indépendamment la mise dans l'état fermé desdits premiers et seconds moyens d'isolation **128,140.** Le module de connexion **132** est donc configuré pour commander indépendamment la connexion du convertisseur **116** au réseau d'alimentation électrique alternatif **120** et la connexion du convertisseur **116** à la partie continue **118** de l'installation **114.**

Comme le dispositif de contrôle de la figure **1****,** le dispositif de contrôle **110** de la figure **4** comprend un module de transfert **134** relié au convertisseur **116** et configuré pour commander le transfert de l'énergie stockée dans le module de stockage d'énergie électrique **126** du convertisseur **116** vers la partie continue **118** de l'installation **114.** Il comprend également un module de rétablissement **136,** relié au convertisseur **116** et configuré pour commander le rétablissement de la puissance dans l'installation **114.**

Dans cet exemple, le dispositif de contrôle **110** comporte de plus un module de réception **142,** configuré pour recevoir un signal de déclenchement. Le signal de déclenchement traduit, de préférence, une anomalie sur la partie continue de l'installation. L'installation peut comprendre un module de détection, apte à émettre le signal de déclenchement lorsqu'une anomalie sur la partie continue de l'installation est détectée.

Ce module de réception **142** est relié à un module de blocage **144** du dispositif, ledit module de blocage **144** étant relié au convertisseur **116.** Le module de blocage **144** est configuré pour commander la mise à l'état bloqué ou à l'état commandable du convertisseur.

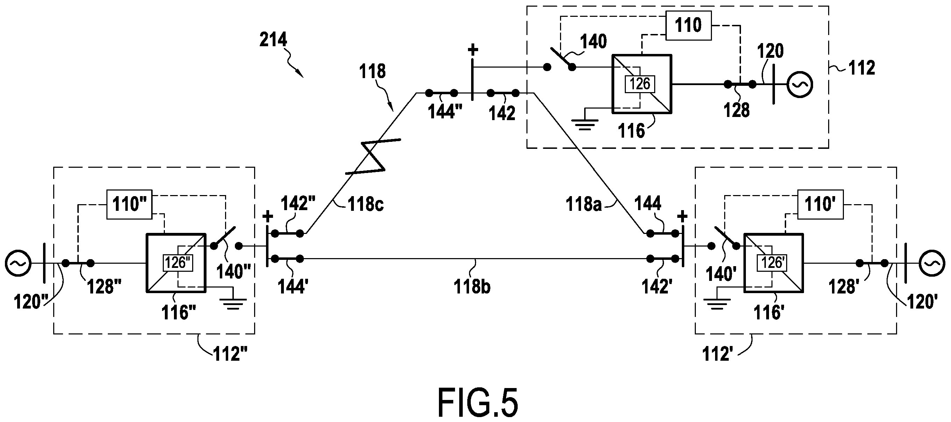

Le fonctionnement d'un tel terminal **112,** comprenant un second mode de réalisation du dispositif de contrôle **110** selon l'invention sera décrit dans les figures **5** à **10** suivantes dans lesquelles il est mis en œuvre.

Sur les figures **5** à **10** on a représenté une installation HVDC **214** à trois terminaux selon la figure **4****,** reliant une partie continue **118** de l'installation à un premier, un deuxième et un troisième réseaux d'alimentation électrique alternatifs **120,120',120".**

La partie continue de l'installation **214** a une architecture triangulaire et se compose d'une première ligne à courant continu **118a,** d'une deuxième ligne à courant continu **118b** et d'une troisième ligne à courant continu **118c.** Chacune des lignes à courant continu comprend des premiers moyens d'isolation de ligne **142,142',142"** disposés en une première extrémité de ladite ligne et des seconds moyens d'isolation de ligne **144,144',144"** disposés en une seconde extrémité de ladite ligne. Ces premiers et seconds moyens d'isolation de ligne peuvent prendre un état ouvert et un état fermé, de manière à connecter ou déconnecter la ligne associée par rapport au reste de la partie continue **118** de l'installation **214.**

L'installation **214** comprend un premier terminal **112** tel que celui illustré en figure **4****,** ainsi qu'un deuxième terminal **112' et** un troisième terminal **112",** sensiblement identiques au premier terminal **112.** Le premier terminal **112** comprend, comme en figure **4****,** un premier convertisseur **116** muni d'un module de stockage **126.** Le premier convertisseur **116** est connecté entre le premier réseau d'alimentation électrique alternatif **120** et la partie continue **118** de l'installation. Le deuxième terminal **112'** comprend un deuxième convertisseur **116'** muni d'un module de stockage d'énergie électrique **126'.** Le deuxième convertisseur **116'** est connecté entre le deuxième réseau d'alimentation électrique alternatif **120'** et la partie continue **118** de l'installation. Le troisième terminal **112"** comprend un troisième convertisseur **116"** muni d'un module de stockage d'énergie électrique **126".** Le troisième convertisseur **116"** est connecté entre le troisième réseau d'alimentation électrique alternatif **120"** et la partie continue **118** de l'installation.

De manière identique au convertisseur **116** du terminal **112** de la figure **4****,** les premier, deuxième et troisième convertisseurs **116,116',116"** des figures **5** à **10** peuvent être placés dans un état bloqué ou dans un état commandable. De plus, mais de manière non-limitative, ces convertisseurs **116,116',116"** peuvent être placés dans un état de compensation. Dans cet état de compensation, lesdits convertisseurs sont aptes à fournir une tension alternative de compensation à un réseau d'alimentation électrique alternatif.

De manière identique au terminal **112** de la figure **4****,** les premier, deuxième et troisième terminaux **112,112',112"** comprennent des premiers moyens d'isolation **128,128',128"** disposés entre leurs convertisseurs **116,116',116"** respectifs et respectivement les premier, deuxième et troisième réseaux d'alimentation électrique alternatifs **120,120',120".** De plus, les premier, deuxième et troisième terminaux **112,112',112"** comprennent des seconds moyens d'isolation **140,140',140"** disposés entre leurs convertisseurs **116,116',116"** respectifs et la partie continue **118** de l'installation **214.**

Les premier, deuxième et troisième terminaux **112,112',112"** comprennent respectivement un premier, un deuxième et un troisième dispositifs de contrôle **110,110',110",** tels que celui illustré en figure **4****,** et qui sont configurés pour commander respectivement les premier, deuxième et troisième terminaux **112,112',112".** A des fins de simplifications, les différents modules composant les terminaux, illustrés en figure **4****,** ne sont pas reproduits sur les figures **5** à **10****.**

Dans cet exemple, les premier et deuxième dispositifs de contrôle **110,110'** sont configurés pour commander les premier et deuxième terminaux **112,112'** selon une routine de rétablissement de la tension de la partie continue. Le troisième dispositif de contrôle **110"** est configuré pour commander le troisième terminal **112"** selon une routine de compensation. De manière générale, on commande selon une telle routine de compensation les terminaux reliés à un réseau d'alimentation électrique alternatif dit « faible », c'est-à-dire un réseau sensible aux perturbations, ayant une puissance de court-circuit faible. L'installation peut en outre comporter un module de diagnostic configuré pour déterminer quels sont les réseaux d'alimentation électrique alternatifs faibles afin de commander les terminaux correspondant selon ladite routine de compensation.

Dans les exemples non limitatifs des figures **5** à **10****,** l'installation est dans une configuration dite asymétrique. Sans sortir du cadre de l'invention, l'installation pourrait présenter une configuration de type monopole symétrique, monopole asymétrique ou encore de type bi-pôle.

Dans l'exemple de la figure **5****,** les premier, deuxième et troisième convertisseurs **116,116',116"** sont initialement dans l'état commandable. L'apparition d'une fuite de courant sur la ligne **118c** de la partie continue **118** de l'installation **214** est représentée par un éclair. Cette fuite de courant entraîne une augmentation soudaine du courant dans la partie continue **118.** Dès lors, un signal de déclenchement est émis, par action d'un opérateur sur un interrupteur ou grâce à un module de détection d'une telle hausse du courant continu, tel que décrit précédemment.

Les modules de réception de chacun des dispositifs de contrôle **110,110',110"** reçoivent ledit signal de déclenchement et les modules de blocage de chacun de ces dispositifs de contrôle commandent de manière synchronisée la mise à l'état bloqué des convertisseurs **116,116',116"** associés, en réponse à ce signal de déclenchement. Les modules d'isolation de chacun des dispositifs de contrôle commandent alors l'ouverture des seconds moyens d'isolation **140,140',140"** respectivement des premier, deuxième et troisième terminaux **112,112',112",** de manière à isoler les premier, deuxième et troisième convertisseurs **116,116',116"** par rapport à la partie continue de l'installation. On constate que la partie continue **118** de l'installation **214** est alors isolée de tous les convertisseurs **116,116',116"** et donc de tous les terminaux **112,112',112"** et qu'en conséquence sa tension baisse, jusqu'à être placée dans l'état basse tension. Les convertisseurs **116,116',116"** sont protégés et ne risquent pas d'être endommagés en raison de la fuite de courant sur la ligne **118c** de la partie continue **118** de l'installation.

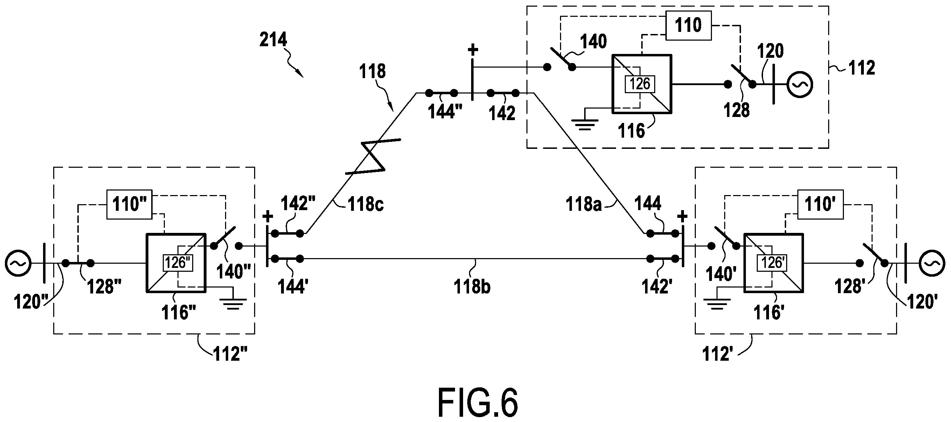

Comme on peut le voir en figure **6****,** les modules d'isolation des dispositifs de contrôle des premier et deuxième terminaux **112,112'** commandent alors de manière synchronisée l'ouverture des premiers moyens d'isolation **128,128'** respectivement des premier et deuxième terminaux **112,112',** de manière à isoler les premier et deuxième convertisseurs **116,116'** par rapport aux premier et deuxième réseaux d'alimentation électrique alternatifs **120,120'.**

En parallèle, le module de blocage du troisième dispositif de contrôle **110"** commande la mise dans l'état de compensation du troisième convertisseur **116".** Le troisième convertisseur se comporte alors comme un compensateur (« Static Synchronous Compensator : STATCOM » en langue anglaise). Il fournit une tension alternative de compensation au troisième réseau d'alimentation électrique alternatif **120",** considéré comme un réseau faible.

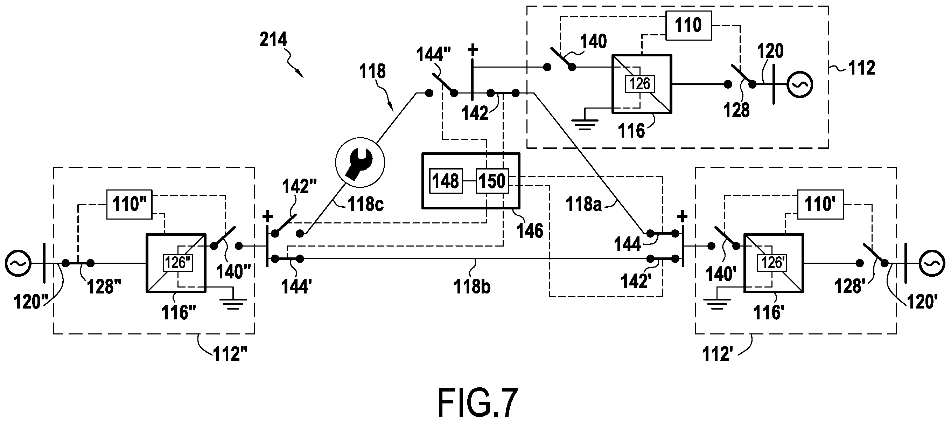

Sur la figure **7****,** l'installation comporte, de manière non limitative, un organe de contrôle **146** comprenant un module de localisation **148.** Le module de localisation **148** est configuré pour localiser la ou les lignes défaillantes, par exemple celles sur lesquelles apparait la fuite de courant à l'origine du signal de déclenchement. L'organe de contrôle comporte de plus un module d'isolation de ligne **150,** configuré pour commander l'ouverture des premiers et seconds moyens d'isolation de ligne de la ligne défaillante.

Dans le présent exemple, le module de localisation **148** de l'organe de contrôle **146** localise que la troisième ligne **118c** est défaillante et transmet l'information au module d'isolation de ligne **150,** qui commande à son tour l'ouverture des premiers et seconds moyens d'isolation de ligne **142",144"** de la troisième ligne **118c.** On constate que la troisième ligne **118c** est alors isolée de la partie continue de l'installation. Il est donc possible pour un opérateur d'intervenir sur cette ligne **118c** pour la réparer ou pour réaliser des opérations de maintenance, comme l'indique la clé à molette sur cette troisième ligne **118c.**

En variante, sans sortir du cadre de l'invention, chacun des terminaux pourrait comporter un sous-module de localisation qui lui est propre, permettant de commander l'ouverture et la fermeture des moyens d'isolation de ligne disposés directement entre le terminal et les lignes auxquelles il est relié.

A des fins de simplification, l'organe de contrôle n'est pas représenté sur les figures **5****,** **6****,** **8****,** **9** et **10****.**

Les modules d'isolation des dispositifs de contrôle **110,110',110"** des trois terminaux **112,112',112"** commandent le maintien dans l'état ouvert des seconds moyens d'isolation **140,140',140"** pendant une durée choisie. La partie continue **118** est donc maintenue isolée des convertisseurs **116,116',116"** pendant cette durée. Cette durée peut être prédéterminée, auquel cas, les modules d'isolation peuvent être munis d'un minuteur programmable. De manière alternative, l'installation peut comporter un interrupteur permettant à l'opérateur en charge des réparations de transmettre aux modules d'isolation des modules de contrôle **110,110',110"** une commande d'interruption de l'isolation.

Il est alors nécessaire de rétablir la tension dans la première ligne **118a** et dans la deuxième ligne **118b** et donc de placer la partie continue **118** de l'installation dans l'état haute tension.

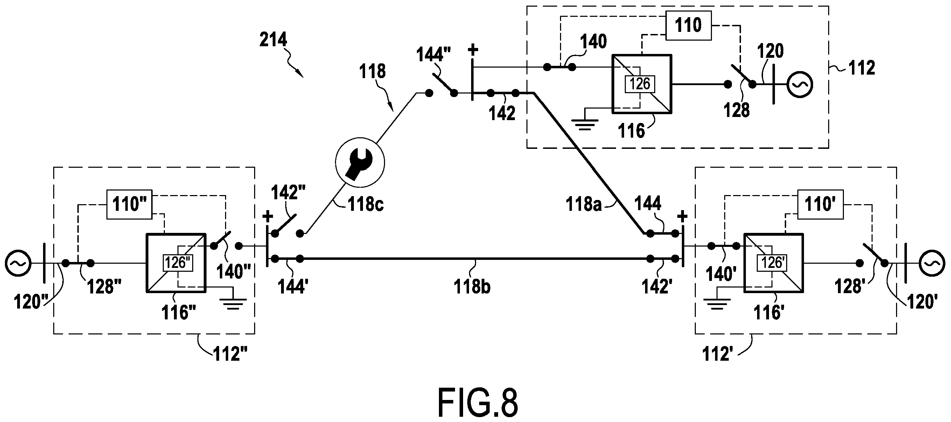

Pour ce faire, comme représenté en figure **8****,** les modules de connexion des premier et deuxième terminaux **112,112'** commandent de manière synchronisée la fermeture des seconds moyens d'isolation **140,140'** desdits premier et deuxième terminaux. Aussi, les premier et deuxième convertisseurs **116,116'** sont reconnectés à la partie continue **118** de l'installation. Les seconds moyens d'isolation **140"** du troisième terminal **112"** sont maintenus ouverts, de sorte que le troisième convertisseur **116"** est maintenu isolé de la partie continue **118.** Le troisième convertisseur continue d'opérer en mode compensateur, ou STATCOM.

Les modules de blocage des premier et deuxième terminaux **112,112'** commandent alors respectivement la mise dans l'état commandable simultanée des premier et deuxième convertisseurs **116,116'.**

Les modules de transfert des premier et deuxième terminaux **112,112'** envoient alors un signal de transfert respectivement aux premier et deuxième convertisseurs **116,116',** afin de commander le transfert de l'énergie stockée dans les modules de stockage **126,126'** desdits convertisseurs vers la partie continue **118** de l'installation **214.** Ceci a pour conséquence de rétablir la tension, et donc de placer la partie continue de l'installation dans l'état haute tension, symbolisé par les première et deuxième lignes à courant continu **118a,118b** représentées en trait épais.

Selon une variante non limitative, les premier et deuxième convertisseurs **116,116'** de l'installation peuvent ne pas fournir simultanément une énergie à la partie continue de l'installation. Dans cette variante, les premier et deuxième terminaux **112,112'** ne participent pas, à chaque instant, au rétablissement de la tension dans la partie continue de l'installation. Par exemple, lorsque l'énergie stockée dans le module de stockage de l'un de premier et deuxième convertisseurs **116,116'** devient inférieure à un seuil bas, ledit convertisseur cesse de participer au rétablissement de la tension, tandis que l'autre convertisseur continue de fournir une énergie.

Durant l'étape de rétablissement de la tension décrite précédemment, les premiers moyens d'isolation **128,128'** des premier et deuxième terminaux **112,112'** sont maintenus ouverts de manière à maintenir l'isolation entre les premier et deuxième convertisseurs **116,116'** et respectivement les premier et deuxième réseaux d'alimentation électrique alternatifs **120,120'.**

Grâce au dispositif de contrôle selon l'invention, lors du rétablissement de la tension dans la partie continue **118** de l'installation, la puissance des réseaux d'alimentation électrique alternatifs n'est pas impactée.

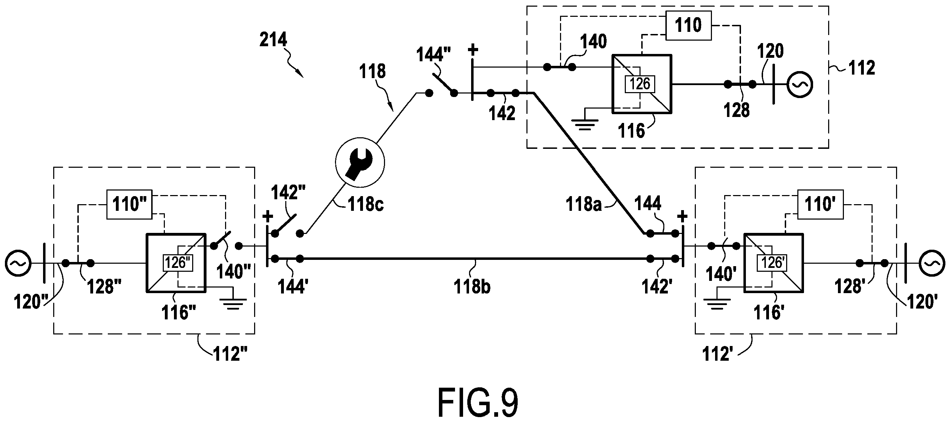

Comme illustré en figure **9****,** lorsque la partie continue **118** de l'installation **214** est de nouveau dans l'état haute tension, les modules de connexion des premier et deuxième dispositifs de contrôle **110,110'** commandent la fermeture des premiers moyens d'isolation **128,128'** des premier et deuxième terminaux **112,112'.** Le premier convertisseur **116** est donc reconnecté au premier réseau d'alimentation électrique alternatif **120** et le deuxième convertisseur **116'** est reconnecté au deuxième réseau d'alimentation électrique alternatif **120'.** La partie continue de l'installation et les premier et second réseaux d'alimentation électrique alternatifs se synchronisent alors.

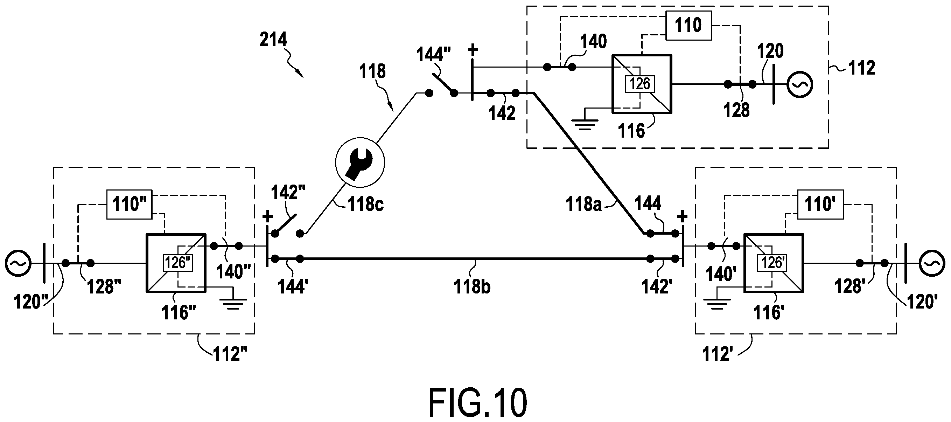

Comme on peut le voir en figure **10****,** le module de connexion du troisième dispositif de contrôle **110"** commande ensuite la fermeture des seconds moyens d'isolation **140"** du troisième terminal **112".** Le troisième convertisseur **116"** est donc reconnecté à la partie continue **118** de l'installation **214.** En variante, en s'assurant que la référence de puissance dans l'installation est sensiblement nulle, il est possible de reconnecter le troisième convertisseur **116"** à la partie continue **118** avant de reconnecter les premier et deuxième convertisseurs **116,116'** respectivement aux premier et deuxième réseaux d'alimentation électrique alternatifs **120,120'.** Aussi, le module de connexion du troisième dispositif de contrôle **110"** commande la fermeture des seconds moyens d'isolation **140"** du troisième terminal **112"** puis les modules de connexion des premier et deuxième dispositifs de contrôle **110,110'** commandent la fermeture des premiers moyens d'isolation **128,128'** des premier et deuxième terminaux **112,112'.**

Par suite, lorsque les premiers moyens **128,128'** d'isolation des premier et deuxième terminaux **112,112'** sont fermés et les seconds moyens d'isolation **140,140',140"** des premier, deuxième et troisième terminaux **112,112',112"** sont fermés, comme illustré en figure **10****,** il est possible de procéder au rétablissement de la puissance dans l'installation. Pour ce faire, les modules de rétablissement des premier, deuxième et troisième dispositifs de contrôle **110,110',110"** procèdent alors au rétablissement de la puissance de l'installation **214** à sa valeur nominale.

De manière non limitative, les premier, deuxième et troisième dispositifs de contrôle **110,110',110"** sont synchronisés. En particulier, les premier et deuxième terminaux **112,112'** sont commandés de manière synchronisée et de manière identique par les premier et deuxième dispositifs de contrôle.

Durant les étapes illustrées en figures **7** à **10****,** la ligne défaillante **118c** est maintenue isolée de sorte qu'on procède au rétablissement de la puissance dans l'installation **214** en s'affranchissant des perturbations causées par cette ligne **118c.**

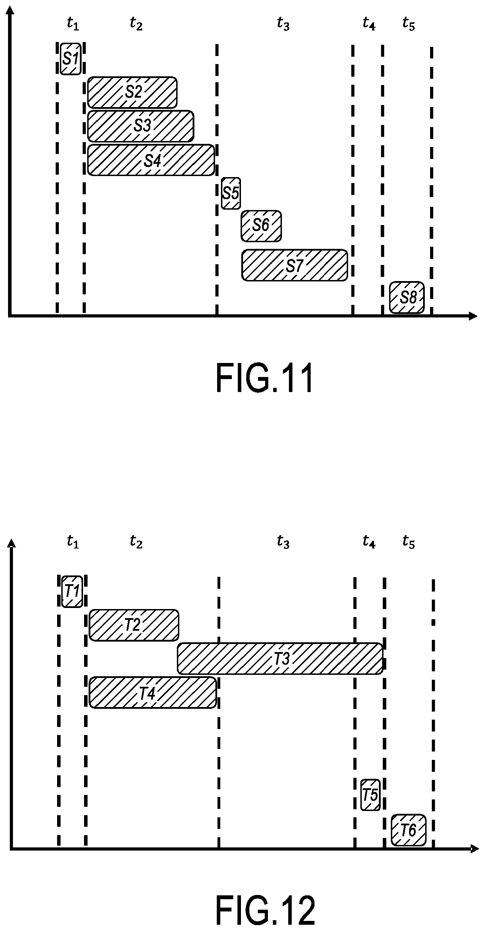

Les figures **11** et **12** illustrent les étapes d'un exemple procédé selon l'invention mis en œuvre sur deux terminaux distincts, tels que le premier terminal et le troisième terminal des figures **5** à **10****,** selon deux routines distinctes.

La figure **11** est un chronogramme qui illustre la commande du premier terminal, selon une routine de rétablissement de la puissance dans la partie continue de l'installation. A l'instant **t₁** on réalise une étape **S1** de mise en état bloqué du convertisseur, en réponse à un signal de déclenchement. A l'instant **t₂,** on déclenche simultanément les étapes **S2, S3** et **S4.** L'étape **S2** consiste à isoler la partie continue de l'installation par rapport au convertisseur. L'étape **S3** consiste à isoler le convertisseur par rapport au réseau d'alimentation électrique alternatif. On constate que l'isolation du convertisseur par rapport à la partie continue s'opère avant l'isolation du convertisseur par rapport au réseau d'alimentation électrique alternatif. Ceci peut être dû au fait que les moyens d'isolation de la partie continue sont plus rapides que les moyens d'isolation du réseau d'alimentation électrique alternatif. L'étape **S4** consiste à détecter une anomalie sur la partie continue de l'installation, telle une augmentation du courant continu. L'étape d'isolation **S3** est maintenue pendant une durée choisie, permettant par exemple de procéder à des réparations.

A l'instant **t₃** on réalise une étape **S5** de reconnexion de la partie continue de l'installation et de mise à l'état commandable du convertisseur. L'étape **S5** est suivie d'une étape **S6** de transfert de l'énergie stockée dans le module de stockage d'énergie électrique du convertisseur vers la partie continue de l'installation, afin de placer ladite partie continue dans l'état haute tension. Simultanément à cette étape **S6** on enclenche une étape **S7** de reconnexion du convertisseur au réseau d'alimentation électrique alternatif. Le temps nécessaire pour rétablir la haute tension dans la partie continue de l'installation étant beaucoup plus court que le temps nécessaire à la reconnexion de la partie continue, on peut enclencher les étapes **S6** et **S7** simultanément afin d'accélérer le procédé. A l'instant **t₅,** on réalise une étape **S8** de rétablissement de la puissance dans l'installation.

La figure **12** est un chronogramme qui illustre la commande du troisième terminal, selon une routine de compensation. A l'instant **t₁** on réalise une étape **T1** de mise en état bloqué du convertisseur du troisième terminal. A l'instant **t₂,** on déclenche simultanément les étapes **T2** et **T4.** L'étape **T2** consiste isoler la partie continue de l'installation par rapport au convertisseur du troisième terminal. L'étape **T4** consiste à détecter une anomalie sur la partie continue de l'installation, telle une augmentation du courant continu. Lorsque l'étape **T2** est réalisée, et donc que la partie continue de l'installation est isolée par rapport au convertisseur du troisième terminal, on réalise une étape **T3** consistant à mettre le convertisseur du troisième terminal dans un état de compensation dans lequel il fournit au réseau d'alimentation électrique qui lui est propre une tension alternative de compensation. Ce convertisseur se comporte alors comme un compensateur (« Static Synchronous Compensator : STATCOM »). A l'instant **t₄** on réalise une étape **T5** de reconnexion du convertisseur à la partie continue de l'installation. A l'instant **t₅,** on réalise une étape **T6** de rétablissement de la puissance dans l'installation.

En variante, l'étape **T5** de reconnexion de la partie continue au troisième convertisseur fonctionnant en compensateur pourrait être antérieure à l'étape **S7** de reconnexion du convertisseur du premier terminal au réseau d'alimentation électrique alternatif.

## Revendications

1. Dispositif de contrôle (10,110) d'un terminal (12,112) pour le rétablissement de la puissance dans une installation (14,114,214) de transport de courant continu haute tension multi-terminaux HVDC comportant le terminal, le terminal comprenant au moins un convertisseur (16,116) étant configuré pour convertir une tension alternative en une tension continue et inversement, ledit convertisseur comprenant un module de stockage d'énergie électrique (26,126) et étant connecté entre un réseau d'alimentation électrique alternatif (20,120) et une partie continue de ladite installation (18,118) étant configuré pour être placée dans un état haute tension ou dans un état basse tension, le dispositif étant **caractérisé en ce qu'**il comporte :
• un module d'isolation (30,130) configuré pour commander l'isolation du convertisseur par rapport au réseau d'alimentation électrique alternatif, lorsque la partie continue de l'installation est dans l'état basse tension ;
• un module de transfert (34,134) configuré pour commander le transfert de l'énergie stockée dans le module de stockage d'énergie électrique du convertisseur vers la partie continue de l'installation, afin de placer ladite partie continue dans l'état haute tension ;
• un module de connexion (32,132) configuré pour commander la reconnexion du convertisseur au réseau d'alimentation électrique alternatif, lorsque la partie continue de l'installation est dans l'état haute tension ; et
• un module de rétablissement (36,136) configuré pour commander le rétablissement de la puissance dans ladite installation.

2. Dispositif (10,110) selon la revendication 1, **caractérisé en ce que** le terminal (12,112) comprend des premiers moyens d'isolation commandables disposés entre le convertisseur (16,116) et le réseau d'alimentation électrique alternatif (20,120), le module de connexion (32,132) et le module d'isolation (30,130) étant configurés pour commander lesdits premiers moyens d'isolation pour permettre respectivement la connexion et l'isolation dudit convertisseur par rapport au réseau d'alimentation électrique alternatif.

3. Dispositif (110) selon la revendication 1 ou 2, **caractérisé en ce que** le convertisseur (116) peut être placé dans un état commandable ou dans un état bloqué, et **en ce que** le dispositif comprend :
• un module de réception d'un signal de déclenchement ;
• un module de blocage configuré pour commander la mise en état bloqué du convertisseur, en réponse à la réception du signal de déclenchement,
le module d'isolation (130) étant en outre configuré pour commander l'isolation de la partie continue (118) de l'installation (114,214) par rapport au convertisseur, avant l'isolation du convertisseur par rapport au réseau d'alimentation électrique alternatif (120).

4. Dispositif (110) selon la revendication 3, **caractérisé en ce que** :
• le module d'isolation (130) est en outre configuré pour commander le maintien de l'isolation de la partie continue (118) de l'installation (114,214) par rapport au convertisseur (116) pendant une durée choisie ;
• le module de connexion (132) est en outre configuré pour commander la reconnexion de la partie continue de l'installation au convertisseur ; et
• le module de blocage est en outre configuré pour commander la mise en état commandable du convertisseur.

5. Dispositif (110) selon la revendication 3 ou 4, **caractérisé en ce que** le terminal (112) comprend en outre des seconds moyens d'isolation commandables disposés entre le convertisseur (116) et la partie continue (118) de l'installation (114,214), le module de connexion (132) et le module d'isolation (130) étant configurés pour commander lesdits seconds moyens d'isolation pour permettre respectivement la connexion et l'isolation de la partie continue de l'installation par rapport au convertisseur.

6. Installation (214) de transport de courant continu haute tension multi-terminaux, **caractérisée en ce qu'**elle comprend une pluralité de terminaux (112,112'), au moins un des terminaux comprenant un dispositif de contrôle (110,110') selon l'une quelconque des revendications 1 à 5 et un convertisseur (116,116') contrôlé par un tel dispositif et permettant de convertir une tension alternative en une tension continue et inversement, le convertisseur comprenant un module de stockage d'énergie électrique (126,126') et étant connecté à un réseau d'alimentation électrique alternatif (120,120') qui lui est propre, lesdits terminaux étant reliés entre eux par l'intermédiaire d'une pluralité de lignes à courant continu (118a,118b,118c) formant la partie continue (118) de l'installation.

7. Installation (214) selon les revendications 4 et 6, **caractérisée en ce qu'**elle comprend un organe de contrôle (146) de l'installation comprenant un module de localisation (148) configuré pour localiser au moins une ligne à courant continu (118c) défaillante pendant le maintien de l'isolation de la partie continue de l'installation par rapport au convertisseur (116,116'), et un module d'isolation de ligne (150) configuré pour commander l'isolation de ladite ligne à courant continu défaillante (118c) par rapport à la partie continue de l'installation (118).

8. Installation (214) selon la revendication 7, **caractérisée en ce que** les lignes à courant continu (118a,118b,118c) sont munies de premiers moyens d'isolation de ligne (142,142',142") disposés en une première extrémité desdites lignes et de seconds moyens d'isolation de ligne (144,144',144") disposés en une seconde extrémité desdites lignes, le module d'isolation de ligne (150) étant configuré pour commander lesdits premiers et seconds moyens d'isolation de ligne de la ligne défaillante pour permettre l'isolation de ladite ligne par rapport à la partie continue de l'installation (118).

9. Installation (214) selon l'une quelconque des revendications 6 à 8, **caractérisée en ce qu'**elle comprend au moins un terminal supplémentaire (112") comportant un dispositif de contrôle supplémentaire (110") et un convertisseur supplémentaire (116") contrôlé par ledit dispositif supplémentaire, le convertisseur supplémentaire comprenant un module de stockage d'énergie électrique (126") et étant connecté entre un réseau d'alimentation électrique alternatif supplémentaire (120") qui lui est propre et la partie continue (118) de l'installation, ledit convertisseur supplémentaire pouvant être placé dans un état de compensation dans lequel il est apte à fournir une tension alternative de compensation dans ledit réseau alternatif supplémentaire, et **en ce que** ledit dispositif de contrôle supplémentaire comprend :
• un module de réception supplémentaire du signal de déclenchement ;
• un module de blocage supplémentaire configuré pour commander la mise en état bloqué du convertisseur supplémentaire dudit terminal supplémentaire, en réponse au signal de déclenchement ;
• un module d'isolation supplémentaire configuré pour commander l'isolation de la partie continue de l'installation par rapport audit convertisseur supplémentaire ;
• un module de compensation configuré pour commander la mise en état de compensation dudit convertisseur supplémentaire, de manière à fournir une tension alternative de compensation au réseau d'alimentation électrique alternatif supplémentaire ; et
• un module de connexion supplémentaire configuré pour commander la reconnexion dudit convertisseur supplémentaire à la partie continue de l'installation après la reconnexion des convertisseurs des autres terminaux (112,112') de l'installation aux réseaux d'alimentation électrique alternatifs qui leur sont propres.

10. Procédé de contrôle d'un terminal (12,112) pour le rétablissement de la puissance dans une installation (14,114,214) de transport de courant continu haute tension multi-terminaux HVDC comportant le terminal, ledit terminal comprenant au moins un convertisseur (16,116) permettant de convertir une tension alternative en une tension continue et inversement, ledit convertisseur comprenant un module de stockage d'énergie électrique (26,126) et étant connecté entre un réseau d'alimentation électrique alternatif (20,120) et une partie continue (18,118) de l'installation pouvant être placée dans un état basse tension et dans un état haute tension,
le procédé étant **caractérisé en ce qu'**il comprend les étapes de :
• isolation du convertisseur par rapport au réseau d'alimentation électrique alternatif, lorsque la partie continue de l'installation est dans l'état basse tension ;
• transfert de l'énergie stockée dans le module de stockage d'énergie électrique du convertisseur vers la partie continue de l'installation, afin de placer ladite partie continue de l'installation dans l'état haute tension ;
• reconnexion du convertisseur au réseau d'alimentation électrique alternatif ; et
• rétablissement de la puissance dans l'installation.

11. Procédé selon la revendication 10, **caractérisé en ce que** le convertisseur (116) peut être placé dans un état commandable ou dans un état bloqué, et **en ce que** la partie continue (118) de l'installation (114, 214) est placée dans l'état basse tension grâce aux étapes antérieures de :
• réception d'un signal de déclenchement ;
• mise en état bloqué du convertisseur, en réponse au signal de déclenchement ; puis
• isolation de la partie continue de l'installation par rapport au convertisseur.

12. Procédé selon la revendication 11, **caractérisé en ce qu'**après l'étape d'isolation du convertisseur (116) par rapport au réseau d'alimentation électrique alternatif (120) et avant l'étape de transfert de l'énergie stockée dans le module de stockage d'énergie électrique (124) du convertisseur vers la partie continue (118) de l'installation (114,214), il comprend les étapes intermédiaires de :
• maintien de l'isolation de la partie continue de l'installation par rapport au convertisseur pendant une durée choisie ;
• reconnexion de la partie continue de l'installation au convertisseur ; et
• mise en état commandable du convertisseur.

13. Procédé selon la revendication 12, **caractérisé en ce que** le signal de déclenchement est émis en réponse à la détection d'une anomalie sur la partie continue de l'installation et **en ce qu'**il comprend une étape de correction de l'anomalie simultanée à l'étape de maintien de l'isolation de la partie continue (118) de l'installation (114,214) par rapport au convertisseur (116).

14. Procédé selon la revendication 13, **caractérisé en ce que** l'émission du signal de déclenchement est réalisée en réponse à la détection d'une augmentation du courant de la partie continue (118) de l'installation au-delà d'un seuil prédéterminé.

15. Procédé selon l'une quelconque des revendications 10 à 14, **caractérisé en ce que** l'installation (14,114) comprend une pluralité de terminaux (112,112'), chacun des terminaux comprenant un convertisseur (116,116') permettant de convertir une tension alternative en une tension continue et inversement, chacun des convertisseurs comprenant un module de stockage d'énergie électrique (124,124') et étant connecté à un réseau d'alimentation électrique alternatif (120,120') qui lui est propre, lesdits convertisseurs étant reliés entre eux par l'intermédiaire d'une pluralité de lignes à courant continu (118a,118b,118c) formant la partie continue (118) de l'installation, chacun desdits terminaux étant contrôlés de manière synchronisée.

16. Procédé selon les revendications 12 et 15, **caractérisé en ce qu'**il comprend, pendant l'étape de maintien de l'isolation de la partie continue (118) de l'installation par rapport aux convertisseurs (116,116') :
• une étape de localisation d'une ligne à courant continu défaillante (118c) ; et
• une étape d'isolation de ladite ligne à courant continu défaillante par rapport à la partie continue de l'installation.

17. Procédé selon la revendication 15 ou 16, **caractérisé en ce que** l'installation comprend au moins un terminal supplémentaire (112") comportant un convertisseur supplémentaire (116") comprenant un module de stockage d'énergie électrique (126") et étant connecté entre un réseau d'alimentation électrique alternatif supplémentaire (120") qui lui est propre et la partie continue (118) de l'installation, ledit convertisseur supplémentaire pouvant être placé dans un état de compensation dans lequel il est apte à fournir une tension alternative de compensation dans ledit réseau alternatif supplémentaire, ledit procédé comprenant les étapes de :
• mise en état bloquée du convertisseur supplémentaire dudit terminal supplémentaire, en réponse au signal de déclenchement ;
• isolation de la partie continue de l'installation par rapport audit convertisseur supplémentaire ;
• mise en état de compensation dudit convertisseur supplémentaire, de manière à fournir une tension alternative de compensation au réseau d'alimentation électrique alternatif supplémentaire propre audit convertisseur supplémentaire ; et
• reconnexion dudit convertisseur supplémentaire à la partie continue de l'installation après l'étape de reconnexion des convertisseurs des autres terminaux de l'installation aux réseaux d'alimentation électrique alternatifs qui leur sont propres.

## Patentansprüche

1. Vorrichtung (10, 110) zum Steuern einer Umrichterstation (12, 112) zur Leistungswiederherstellung in einer Mehrpunkt-Hochspannungs-Gleichstrom-Übertragungsanlage HGÜ (14, 114, 214), welche die Umrichterstation beinhaltet, wobei die Umrichterstation mindestens einen Umrichter (16, 116) umfasst, der dazu ausgestaltet ist, eine Wechselspannung in eine Gleichspannung umzurichten und umgekehrt, wobei der Umrichter ein Speichermodul (26, 126) für elektrische Energie umfasst und zwischen einem Wechselstromversorgungsnetz (20, 120) und einem Gleichstromteil der Anlage (18, 118) angeschlossen ist, der dazu ausgestaltet ist, in einen Hochspannungszustand oder in einen Niederspannungszustand versetzt zu werden, wobei die Vorrichtung **dadurch gekennzeichnet ist, dass** sie beinhaltet:
• ein Isoliermodul (30, 130), das dazu ausgestaltet ist, die Isolierung des Umrichters in Bezug auf das Wechselstromversorgungsnetz zu befehlen, während sich der Gleichstromteil der Anlage in dem Niederspannungszustand befindet,
• ein Übertragungsmodul (34, 134), das dazu ausgestaltet ist, die Übertragung der in dem Speichermodul für elektrische Energie des Umrichters gespeicherte Energie an den Gleichstromteil der Anlage zu befehlen, um den Gleichstromteil in den Hochspannungszustand zu versetzen,
• ein Anschlussmodul (32, 132), das dazu ausgestaltet ist, den Wiederanschluss des Umrichters an das Wechselstromversorgungsnetz zu befehlen, während sich der Gleichstromteil der Anlage in dem Hochspannungszustand befindet, und
• ein Wiederherstellungsmodul (36, 136), das dazu ausgestaltet ist, die Wiederherstellung der Leistung in der Anlage zu befehlen.

2. Vorrichtung (10, 110) nach Anspruch 1, **dadurch gekennzeichnet, dass** die Umrichterstation (12, 112) erste befehlbare Isoliermittel umfasst, die zwischen dem Umrichter (16, 116) und dem Wechselstromversorgungsnetz (20, 120) angeordnet sind, wobei das Anschlussmodul (32, 132) und das Isoliermodul (30, 130) dazu ausgestaltet sind, die ersten Isoliermittel derart zu befehligen, dass sie den Anschluss bzw. die Isolierung des Umrichters in Bezug auf das Wechselstromversorgungsnetz ermöglichen.

3. Vorrichtung (110) nach Anspruch 1 oder 2, **dadurch gekennzeichnet, dass** der Umrichter (116) in einen befehlbaren Zustand oder in einen gesperrten Zustand versetzt werden kann, und dadurch, dass die Vorrichtung umfasst:
• ein Empfangsmodul für ein Auslösesignal,
• ein Sperrmodul, das dazu ausgestaltet ist, das Versetzen des Umrichters in den Sperrzustand als Reaktion auf den Empfang des Auslösesignals zu befehlen, wobei das Isoliermodul (130) ferner dazu ausgestaltet ist, die Isolierung des Gleichstromteils (118) der Anlage (114, 214) in Bezug auf den Umrichter vor der Isolierung des Umrichters in Bezug auf das Wechselstromversorgungsnetz (120) zu befehlen.

4. Vorrichtung (110) nach Anspruch 3, **dadurch gekennzeichnet, dass**:
• das Isoliermodul (130) ferner dazu ausgestaltet ist, die Aufrechterhaltung der Isolierung des Gleichstromteils (118) der Anlage (114, 214) in Bezug auf den Umrichter (116) während einer ausgewählten Dauer zu befehlen,
• das Anschlussmodul (132) ferner dazu ausgestaltet ist, den Wiederanschluss des Gleichstromteils der Anlage an den Umrichter zu befehlen, und
• das Sperrmodul ferner dazu ausgestaltet ist, das Versetzen des Umrichters in den befehlbaren Zustand zu befehlen.

5. Vorrichtung (110) nach Anspruch 3 oder 4, **dadurch gekennzeichnet, dass** die Umrichterstation (112) ferner zweite befehlbare Isoliermittel umfasst, die zwischen dem Umrichter (116) und dem Gleichstromteil (118) der Anlage (114, 214) angeordnet sind, wobei das Anschlussmodul (132) und das Isoliermodul (130) dazu ausgestaltet sind, die zweiten Isoliermittel zu befehlen, um den Anschluss bzw. die Isolierung des Gleichstromteils der Anlage in Bezug auf den Umrichter zu ermöglichen.

6. Mehrpunkt-Hochspannungs-Gleichstrom-Übertragungsanlage (214), **dadurch gekennzeichnet, dass** sie mehrere Umrichterstationen (112, 112') umfasst, wobei mindestens eine der Umrichterstationen eine Steuervorrichtung (110, 110') nach einem der Ansprüche 1 bis 5 und einen Umrichter (116, 116') umfasst, der durch eine solche Vorrichtung gesteuert wird und es ermöglicht, eine Wechselspannung in eine Gleichspannung umzurichten und umgekehrt, wobei der Umrichter ein Speichermodul (126, 126') für elektrische Energie umfasst und an ein Wechselstromversorgungsnetz (120, 120') angeschlossen ist, das ihm zugeordnet ist, wobei die Umrichterstationen untereinander über mehrere Gleichstromleitungen (118a, 118b, 118c) verbunden sind, die den Gleichstromteil (118) der Anlage bilden.

7. Anlage (214) nach den Ansprüchen 4 und 6, **dadurch gekennzeichnet, dass** sie ein Element (146) zur Steuerung der Anlage umfasst, das ein Lokalisierungsmodul (148), das dazu ausgestaltet ist, mindestens eine fehlerhafte Gleichstromleitung (118c) während der Aufrechterhaltung der Isolierung des Gleichstromteils der Anlage in Bezug auf den Umrichter (116, 116') zu lokalisieren, und ein Leitungsisoliermodul (150), das dazu ausgestaltet ist, die Isolierung der fehlerhaften Gleichstromleitung (118c) in Bezug auf den Gleichstromteil der Anlage (118) zu befehlen, umfasst.

8. Anlage (214) nach Anspruch 7, **dadurch gekennzeichnet, dass** die Gleichstromleitungen (118a, 118b, 118c) mit ersten Leitungsisoliermitteln (142, 142', 142"), die an einem ersten Ende der Leitungen angeordnet sind, und mit zweiten Leitungsisoliermitteln (144, 144', 144"), die an einem zweiten Ende der Leitungen angeordnet sind, versehen sind, wobei das Leitungsisoliermodul (150) dazu ausgestaltet ist, die ersten und zweiten Leitungsisoliermittel der fehlerhaften Leitung zu befehligen, um die Isolierung der Leitung in Bezug auf den Gleichstromteil der Anlage (118) zu ermöglichen.

9. Anlage (214) nach einem der Ansprüche 6 bis 8, **dadurch gekennzeichnet, dass** sie mindestens eine zusätzliche Umrichterstation (112") umfasst, die eine zusätzliche Steuervorrichtung (110") und einen zusätzlichen Umrichter (116"), der durch die zusätzliche Vorrichtung gesteuert wird, beinhaltet, wobei der zusätzliche Umrichter ein Speichermodul (126") für elektrische Energie umfasst und zwischen einem zusätzlichen Wechselstromversorgungsnetz (120"), das ihm zugeordnet ist, und dem Gleichstromteil (118) der Anlage angeschlossen ist, wobei der zusätzliche Umrichter in einen Ausgleichszustand versetzt werden kann, in dem er dazu geeignet ist, eine Ausgleichswechselspannung in dem zusätzlichen Wechselstromnetz bereitzustellen, und dadurch, dass die zusätzliche Steuervorrichtung umfasst:
• ein zusätzliches Empfangsmodul für das Auslösesignal,
• ein zusätzliches Sperrmodul, das dazu ausgestaltet ist, das Versetzen des zusätzlichen Umrichters der zusätzlichen Umrichterstation in den Sperrzustand als Reaktion auf das Auslösesignal zu befehlen,
• ein zusätzliches Isoliermodul, das dazu ausgestaltet ist, die Isolierung des Gleichstromteils der Anlage in Bezug auf den zusätzlichen Umrichter zu befehlen,
• ein Ausgleichsmodul, das dazu ausgestaltet ist, das Versetzen des zusätzlichen Umrichters in einen Ausgleichszustand derart zu befehlen, dass eine Ausgleichswechselspannung an das zusätzliche Wechselstromversorgungsnetz bereitgestellt wird, und
• ein zusätzliches Anschlussmodul, das dazu ausgestaltet ist, den Wiederanschluss des zusätzlichen Umrichters an den Gleichstromteil der Anlage nach dem Wideranschluss von Umrichtern anderer Umrichterstationen (112, 112') der Anlage an Wechselstromversorgungsnetze, die ihnen zugeordnet sind, zu befehlen.

10. Verfahren zur Steuerung einer Umrichterstation (12, 112) zur Leistungswiederherstellung in einer Mehrpunkt-Hochspannungs-Gleichstrom-Übertragungsanlage HGÜ (14, 114, 214), welche die Umrichterstation beinhaltet, wobei die Umrichterstation mindestens einen Umrichter (16, 116) umfasst, der es ermöglicht, eine Wechselspannung in eine Gleichspannung umzurichten und umgekehrt, wobei der Umrichter ein Speichermodul (26, 126) für elektrische Energie umfasst und zwischen einem Wechselstromversorgungsnetz (20, 120) und einem Gleichstromteil (18, 118) der Anlage angeschlossen ist, der in einen Niederspannungszustand und in einen Hochspannungszustand versetzt werden kann, wobei das Verfahren **dadurch gekennzeichnet ist, dass** es die Schritte umfasst des:
• Isolierens des Umrichters in Bezug auf das Wechselstromversorgungsnetz, während sich der Gleichstromteil der Anlage in dem Niederspannungszustand befindet,
• Übertragens der in dem Speichermodul für elektrische Energie des Umrichters gespeicherte Energie an den Gleichstromteil der Anlage, um den Gleichstromteil der Anlage in den Hochspannungszustand zu versetzen,
• Wiederanschließens des Umrichters an das Wechselstromversorgungsnetz, und
• Wiederherstellens der Leistung in der Anlage.

11. Verfahren nach Anspruch 10, **dadurch gekennzeichnet, dass** der Umrichter (116) in einen befehlbaren Zustand oder in einen gesperrten Zustand versetzt werden kann, und dadurch, dass der Gleichstromteil (118) der Anlage (114, 214) in den Niederspannungszustand versetzt wird dank der vorherigen Schritte des:
• Empfangens eines Auslösesignals,
• Versetzens des Umrichters in den Sperrzustand als Reaktion auf das Auslösesignal, dann
• Isolierens des Gleichstromteils der Anlage in Bezug auf den Umrichter.

12. Verfahren nach Anspruch 11, **dadurch gekennzeichnet, dass** es nach dem Schritt des Isolierens des Umrichters (116) in Bezug auf das Wechselstromversorgungsnetz (120) und vor dem Schritt des Übertragens der in dem Speichermodul (124) für elektrische Energie des Umrichters gespeicherten Energie an den Gleichstromteil (118) der Anlage (114, 214) die Zwischenschritte umfasst des:
• Aufrechterhaltens der Isolierung des Gleichstromteils der Anlage in Bezug auf den Umrichter während einer ausgewählten Dauer,
• Wiederanschließens des Gleichstromteils der Anlage an den Umrichter, und
• Versetzens des Umrichters in den befehlbaren Zustand.

13. Verfahren nach Anspruch 12, **dadurch gekennzeichnet, dass** das Auslösesignal als Reaktion auf die Erkennung einer Anomalie an dem Gleichstromteil der Anlage ausgegeben wird, und dadurch, dass es einen Schritt des Korrigierens der Anomalie gleichzeitig mit dem Schritt des Aufrechterhaltens der Isolierung des Gleichstromteils (118) der Anlage (114, 214) in Bezug auf den Umrichter (116) umfasst.

14. Verfahren nach Anspruch 13, **dadurch gekennzeichnet, dass** die Ausgabe des Auslösesignals als Reaktion auf die Erkennung eines Anstiegs des Stroms des Gleichstromteils (118) der Anlage über einen vorbestimmten Schwellenwert erfolgt.

15. Verfahren nach einem der Ansprüche 10 bis 14, **dadurch gekennzeichnet, dass** die Anlage (14, 114) mehrere Umrichterstationen (112, 112') umfasst, wobei jede der Umrichterstationen einen Umrichter (116, 116') umfasst, der es ermöglicht, eine Wechselspannung in eine Gleichspannung umzurichten und umgekehrt, wobei jeder der Umrichter ein Speichermodul (124, 124') für elektrische Energie umfasst und an ein Wechselstromversorgungsnetz (120, 120') angeschlossen ist, das ihm zugeordnet ist, wobei die Umrichter untereinander über mehrere Gleichstromleitungen (118a, 118b, 118c) verbunden sind, die den Gleichstromteil (118) der Anlage bilden, wobei die Umrichterstationen jeweils auf synchronisierte Weise gesteuert werden.

16. Verfahren nach den Ansprüchen 12 und 15, **dadurch gekennzeichnet, dass** es während des Schritts des Aufrechterhaltens der Isolierung des Gleichstromteils (118) der Anlage in Bezug auf die Umrichter (116, 116') umfasst:
• einen Schritt des Lokalisierens einer fehlerhaften Gleichstromleitung (118c), und
• einen Schritt des Isolierens der fehlerhaften Gleichstromleitung in Bezug auf den Gleichstromteil der Anlage.

17. Verfahren nach Anspruch 15 oder 16, **dadurch gekennzeichnet, dass** die Anlage mindestens eine zusätzliche Umrichterstation (112") umfasst, die einen zusätzlichen Umrichter (116") beinhaltet, der ein Speichermodul (126") für elektrische Energie umfasst und zwischen einem zusätzlichen Wechselstromversorgungsnetz (120"), das ihm zugeordnet ist, und dem Gleichstromteil (118) der Anlage angeschlossen ist, wobei der zusätzliche Umrichter in einen Ausgleichszustand versetzt werden kann, in dem er dazu geeignet ist, eine Ausgleichswechselspannung in dem zusätzliche Wechselstromnetz bereitzustellen, wobei das Verfahren die Schritte umfasst des:
• Versetzens des zusätzlichen Umrichters der zusätzlichen Umrichterstation in einen gesperrten Zustand als Reaktion auf das Auslösesignal,
• Isolierens des Gleichstromteils der Anlage in Bezug auf den zusätzlichen Umrichter,
• Versetzens des zusätzlichen Umrichters in den Ausgleichszustand derart, dass eine Ausgleichswechselspannung dem zusätzlichen Wechselstromversorgungsnetz bereitgestellt wird, das dem zusätzlichen Umrichter zugeordnet ist, und
• Wiederanschließens des zusätzlichen Umrichters an den Gleichstromteil der Anlage nach dem Schritt des Wiederanschließens von Umrichtern anderer Umrichterstationen der Anlage an Wechselstromversorgungsnetze, die ihnen zugeordnet sind.

## Claims

1. A device (10, 110) for monitoring a terminal (12, 112) for the restoration of power in a multi-terminal high-voltage DC HVDC installation (14, 114, 214) including the terminal, the terminal comprising at least one converter (16, 116) allowing to convert an AC voltage into a DC voltage and vice versa, said converter comprising an electrical energy storage module (26, 126) and being connected between an AC power supply network (20, 120) and a DC portion of said installation (18, 118) which can be placed in a high-voltage state or in a low-voltage state,
the device being **characterized in that** it includes:
• an isolation module (30, 130) configured to control the isolation of the converter from the AC power supply network, when the DC portion of the installation is in the low-voltage state;
• a transfer module (34, 134) configured to control the transfer of the energy stored in the electrical energy storage module of the converter towards the DC portion of the installation, in order to place said DC portion in the high-voltage state;
• a connection module (32, 132) configured to control the reconnection of the converter to the AC power supply network, when the DC portion of the installation is in the high-voltage state; and
• a restoration module (36, 136) configured to control the restoration of power in said installation.

2. The device (10, 110) according to claim 1, **characterized in that** the terminal (12, 112) comprises first controllable isolation means arranged between the converter (16, 116) and the AC power supply network (20, 120), the connection module (32, 132) and the isolation module (30, 130) being configured to control said first isolation means to enable respectively the connection and isolation of said converter from the AC power supply network.

3. The device (110) according to claim 1 or 2, **characterized in that** the converter (116) can be placed in a controllable state or in a blocked state, and **in that** the device comprises:
• a module for receiving a trigger signal;
• a blocking module configured to control the placing of the converter in the blocked state, in response to receiving the trigger signal,
the isolation module (130) being further configured to control the isolation of the DC portion (118) of the installation (114, 214) from the converter, prior to the isolation of the converter from the AC power supply network (120).

4. The device (110) according to claim 3, **characterized in that**:
• the isolation module (130) is further configured to control the maintenance of the isolation of the DC portion (118) of the installation (114, 214) from the converter (116) for a selected period of time;
• the connection module (132) is further configured to control the reconnection of the DC portion of the installation to the converter; and
• the blocking module is further configured to control the placing of the converter in the controllable state.

5. The device (110) according to claim 3 or 4, **characterized in that** the terminal (112) further comprises second controllable isolation means arranged between the converter (116) and the DC portion (118) of the installation (114, 214), the connection module (132) and the isolation module (130) being configured to control said second isolation means to enable respectively the connection and isolation of the DC portion of the installation from the converter.

6. A multi-terminal high-voltage DC installation (214), **characterized in that** it comprises a plurality of terminals (112, 112'), at least one of the terminals comprising a monitoring device (110, 110') according to the any one of claims 1 to 5 and a converter (116, 116') monitored by such a device and allowing to convert an AC voltage into a DC voltage and vice versa, the converter comprising an electrical energy storage module (126, 126') and being connected to an AC power supply network (120, 120') specific thereto, said terminals being connected together via a plurality of DC lines (118a, 118b, 118c) forming the DC portion (118) of the installation.

7. The installation (214) according to claims 4 and 6, **characterized in that** it comprises a member (146) for monitoring the installation comprising a location module (148) configured to locate at least one faulty DC line (118c) during the maintenance of the isolation of the DC portion of the installation from the converter (116, 116'), and a line isolation module (150) configured to control the isolation of said faulty DC line (118c) from the DC portion of the installation (118).

8. The installation (214) according to claim 7, **characterized in that** the DC lines (118a, 118b, 118c) are provided with first line isolation means (142, 142', 142") arranged at a first end of said lines and second line isolation means (144, 144', 144") arranged at a second end of said lines, the line isolation module (150) being configured to control said first and second faulty line isolation means in order to allow isolation of said line from the DC portion of the installation (118).

9. The installation (214) according to any one of claims 6 to 8, **characterized in that** it comprises at least one additional terminal (112") including an additional monitoring device (110") and an additional converter (116") monitored by said additional device, the additional converter comprising an electrical energy storage module (126") and being connected between an additional AC power supply network (120") specific thereto and the DC portion (118) of the installation, said additional converter can be placed in a compensation state in which it is able to provide a compensation AC voltage in said additional AC network, and **in that** said additional monitoring device comprises:
• an additional module for receiving the trigger signal;
• an additional blocking module configured to control the placing of the additional converter of said additional terminal in the blocked state, in response to the trigger signal;
• an additional isolation module configured to control the isolation of the DC portion of the installation from said additional converter;
• a compensation module configured to control the placing of said additional converter in the compensation state, so as to provide a compensation AC voltage to the additional AC power supply network; and
• an additional connection module configured to control the reconnection of said additional converter to the DC portion of the installation after reconnection of the converters of the other terminals (112, 112') of the installation to the AC power supply networks specific thereto.

10. A method for monitoring a terminal (12, 112) for the restoration of power in a multi-terminal high-voltage DC HVDC installation (14, 114, 214) including the terminal, said terminal comprising at least one converter (16, 116) configured to convert an AC voltage into a DC voltage and vice versa, said converter comprising an electrical energy storage module (26, 126) and being connected between an AC power supply network (20, 120) and a DC portion (18, 118) of the installation that is configured to be placed in a low-voltage state or in a high-voltage state,
the method being **characterized in that** it comprises the steps of:
• isolating the converter from the AC power supply network, when the DC portion of the installation is in the low-voltage state;
• transferring the energy stored in the electrical energy storage module of the converter towards the DC portion of the installation, in order to place said DC portion of the installation in the high-voltage state;
• reconnecting the converter to the AC power supply network; and
• restoring power in the installation.

11. The method according to claim 10, **characterized in that** the converter (116) can be placed in a controllable state or in a blocked state, and **in that** the DC portion (118) of the installation (114, 214) is placed in the low-voltage state thanks to the previous steps of:
• receiving a trigger signal;
• placing the converter in the locked state, in response to the trigger signal; then
• isolating the DC portion of the installation from the converter.

12. The method according to claim 11, **characterized in that**, subsequently to the step of isolating the converter (116) from the AC power supply network (120) and prior to the step of transferring the energy stored in the electrical energy storage module (124) of the converter towards the DC portion (118) of the installation (114, 214), it comprises the intermediate steps of:
• maintaining the isolation of the DC portion of the installation from the converter during a selected period of time;
• reconnecting the DC portion of the installation to the converter; and
• placing the converter in the controllable state.

13. The method according to claim 12, **characterized in that** the trigger signal is emitted in response to the detection of an anomaly on the DC portion of the installation and **in that** it comprises a step of correcting the anomaly simultaneously with the step of maintaining the isolation of the DC portion (118) of the installation (114, 214) from the converter (116).

14. The method according to claim 13, **characterized in that** the emission of the trigger signal is performed in response to the detection of an increase in the current of the DC portion (118) of the installation beyond a predetermined threshold.

15. The method according to any one of claims 10 to 14, **characterized in that** the installation (14, 114) comprises a plurality of terminals (112, 112'), each of the terminals comprising a converter (116, 116') allowing to convert an AC voltage into a DC voltage and vice versa, each of the converters comprising an electrical energy storage module (124, 124') and being connected to an AC power supply network (120, 120') specific thereto, said converters being connected together via a plurality of DC lines (118a, 118b, 118c) forming the DC portion (118) of the installation, each of said terminals being monitored in a synchronized manner.

16. The method according to claims 12 and 15, **characterized in that** it comprises, during the step of maintaining the isolation of the DC portion (118) of the installation from the converters (116, 116'):
• a step of locating a faulty DC line (118c); and
• a step of isolating said faulty DC line from the DC portion of the installation.

17. The method according to claim 15 or 16, **characterized in that** the installation comprises at least one additional terminal (112") including an additional converter (116") comprising an electrical energy storage module (126") and being connected between an additional AC power supply network (120") specific thereto and the DC portion (118) of the installation, said additional converter can be placed in a compensation state in which it is able to provide a compensation AC voltage in said additional AC network, said method comprising the steps of:
• placing the additional converter of said additional terminal in the blocked state, in response to the trigger signal;
• isolating the DC portion of the installation from said additional converter;
• placing the additional converter in the compensation state, so as to provide a compensation AC voltage to the additional AC power supply network specific to said additional converter; and
• reconnecting said additional converter to the DC portion of the installation subsequently to the step of reconnecting the converters of the other terminals of the installation to the AC power supply networks specific thereto.
